# EUROPEAN PATENT APPLICATION

(11) **EP 1 617 323 A1**
(43) Date of publication of application: **18.01.2006**
(21) Application number: 04724165.8
(22) Date of filing: 29.03.2004
(51) Int. Cl.: G06F 3/14, G09G 5/14

(54) **WINDOW STACK CONTROL METHOD, WINDOW MANAGEMENT PROGRAM, AND WINDOW MANAGEMENT APPARATUS**

(30) Priority: 10.04.2003 JP 2003106393
(71) Applicant: MATSUSHITA ELECTRIC INDUSTRIAL CO., LTD., Kadoma-shi, Osaka 571-8501 (JP)
(72) Inventor: NADAMOTO, Yuji, Kyoto 614-8332 (JP)
(74) Representative: Gassner, Wolfgang
(86) International application number: PCT/JP2004/004414
(87) International publication number: WO 2004/090712

(57) **Abstract**

When controlling a window stack for managing a stack of windows in displaying a plurality of windows on a display unit (11) by a computer (7), each of the application programs (101, 102, and 103) assigns a window to a group, and the window management program (104) collectively arrange the window as a group so as to determine a stacking order of the window in the group. Thereby, a window display performed by an application displaying a window at the forefront is prevented from being improperly influenced by another application.

## Description

### TECHNICAL FIELD

The present invention relates to a window stack control method for managing a stack of windows when a plurality of windows are displayed on a display unit by a computer.

### BACKGROUND ART

In recent years, a workstation and a home computer are widespread as a computer for displaying a plurality of windows on a display unit. In these cases, it is general that a user has a plurality of windows displayed on a relatively large screen as a display unit and controls a stacking order which is an up-and-down relationship in stack of windows with using a mouse and a keyboard.

For example, in the case of an X11 window system which is widespread for Unix (R) workstation, when a window is created, the window is positioned at the top of a stack as a stacking order which is an up-and-down relationship in stack of windows, and after the window is mapped, the stack location is shifted in the upward or downward direction by operating a mouse or an application.

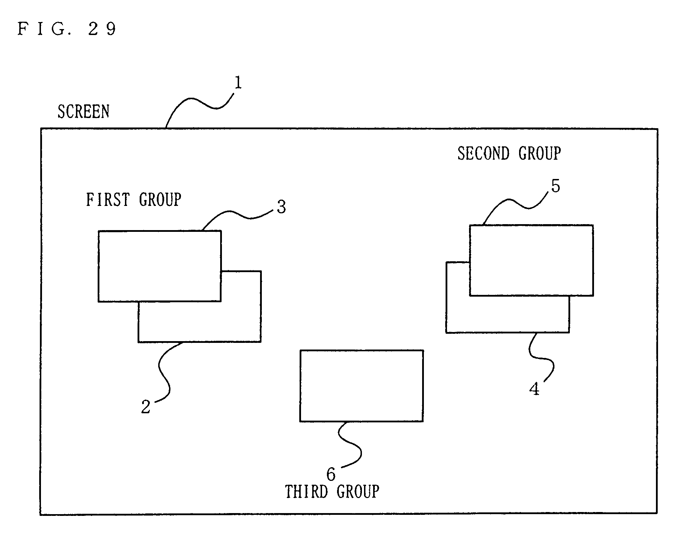

As a specific example, FIG. 29 shows a schematic diagram illustrating an example of a display in the case of displaying five windows in total on a screen in a display unit by 3 kinds of applications which operate on a computer. In FIG. 29, a reference numeral 1 denotes a screen of a display unit which is realized as a CRT monitor or a liquid crystal monitor, numerals 2 and 3 denote windows displayed by a first application, numerals 4 and 5 denote windows displayed by a second application, and a numeral 6 denotes a window displayed by a third application, and the window 2 and window 3 displayed by the first application are a first group, the window 4 and window 5 displayed by the second application are a second group, and the window 6 displayed by the third application is a third group.

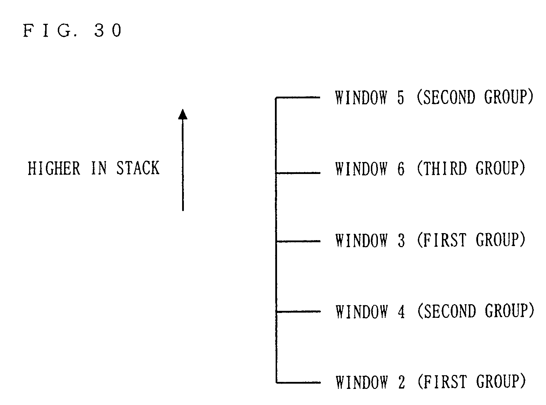

As can be seen in FIG. 29, the window 3 is overlaid on the window 2, and the window 5 is overlaid on the window 4. FIG. 30 shows a schematic diagram illustrating an example of the stacking order of the windows in this case. As can be seen in FIG. 30, the window 3 is positioned higher in stack than the window 2, and therefore the window 3 is overlaid on the window 2 when the two windows overlap each other to be displayed. Similarly, the window 5 is positioned higher in stack than the window 4, and therefore the window 5 is overlaid on the window 4 to be displayed when the two windows overlap each other to be displayed.

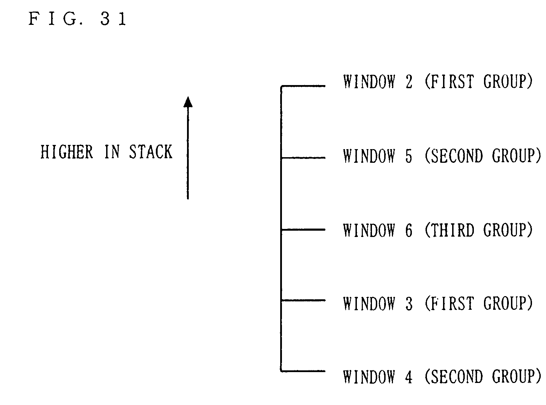

Then, for example, when the first application desires to display the window 2 on the window 3 in this display state, i.e., in the state of this stacking order, for some reason, this has been achieved by shifting the window 2 to the top of the stack. FIG. 31 shows a schematic diagram illustrating the stacking order in this case. As can be seen in FIG. 31, the window 2 is positioned higher in stack than the window 3, and therefore the window 2 is overlaid on the window 3 to be displayed when the two windows overlap each other to be displayed. Further, it can be seen that through this operation window 2 shifts from the bottom to the top in stacking order throughout the second group and the third group windows.

### DISCLOSURE OF THE INVENTION

However, in the above-described conventional window stack control method, in a case where an application subjects a window to window stack shift, and window creation and display, the stack is controlled throughout groups, and therefore there is a problem that the window may be sometimes unintentionally overlaid on a window displayed by another application.

In view of the above-described problems, the object of the present invention is to provide a window stack control method in which a window display of an application displaying the window in the forefront is prevented from being improperly influenced by another application

To overcome the above problems, the present invention adopts the following features. Then, the reference numerals and FIG. Nos. in the parentheses show correspondence with the drawings for help in understanding the present invention, and do not restrict the scope of the present invention in any way.

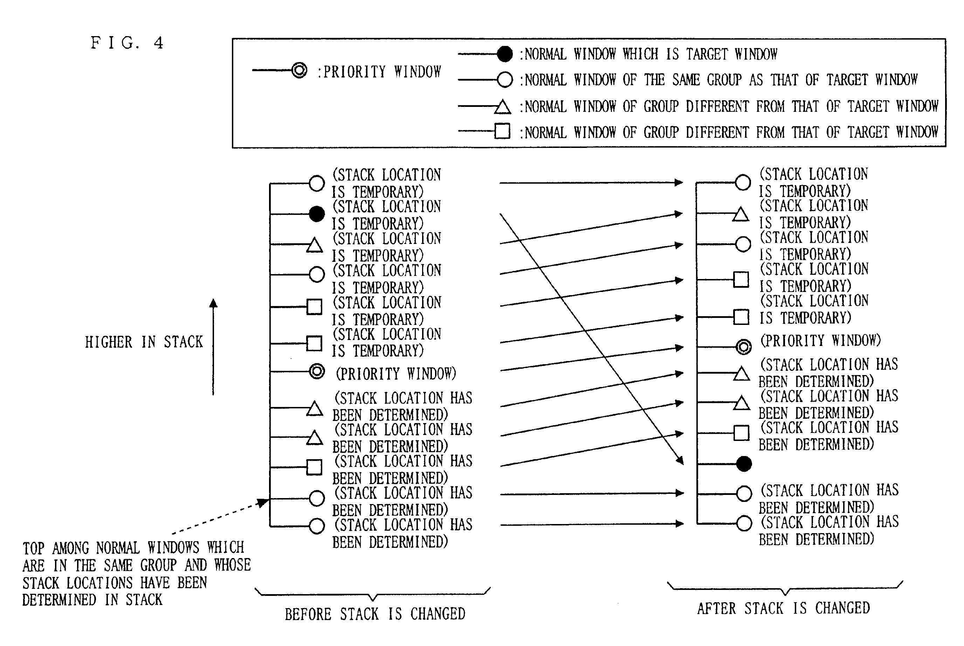

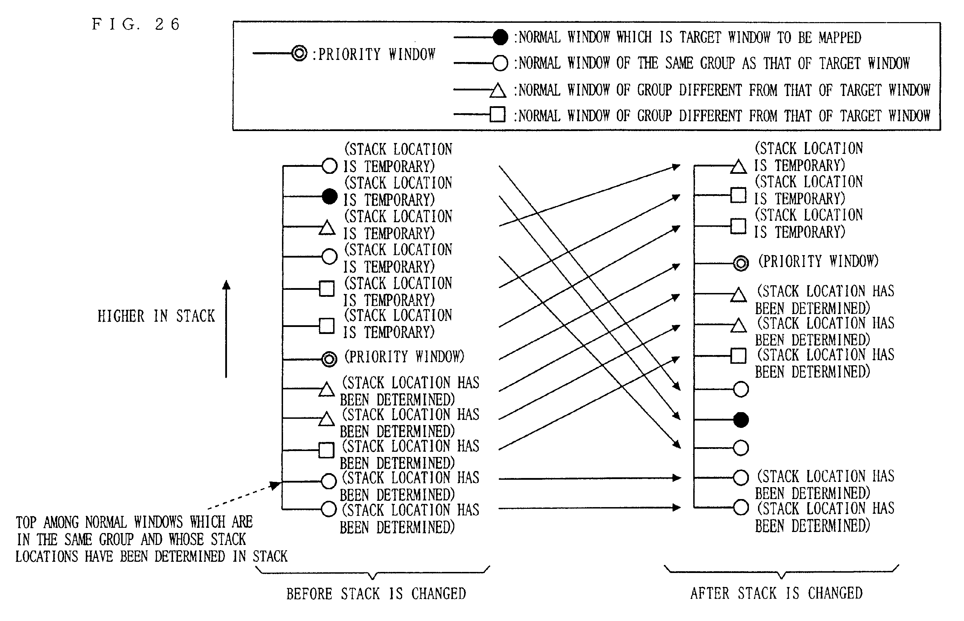

A first invention of the present invention is directed to a window stack control method for managing a stack of a plurality of windows which are displayed on a display unit (11) based on one or more application programs (101, 102 and 103), which comprises the steps of: designating a group of a window from the application program; receiving a request for displaying the window from the application program; and collectively arranging the window as a group so as to determine a stacking order of the window in the group when displaying the window in response to the display request (S308, FIG.4, and S2510, FIG. 26).

Therefore, windows are collectively arranged in a stacking order in units of group, and thereby the respective windows belonging to a group at the top are prevented from being stacked and displayed below windows of another group, and a window display performed by an application displaying a window at the forefront can be prevented from being improperly influenced by another application. Particularly, the effect is prominent in a cellular phone, a PDA or the like, of a small screen, which results in the windows being more likely to be overlapped.

Further, a second invention of the present invention based on the first invention is directed to the window stack control method in which in the collectively arranging step, when a request for displaying a first window which is not collectively arranged as a group is received from the application program, a first window group of windows which belong to a same group as the first window and which are not collectively arranged as a group and a second window group of windows which belong to a same group as the first window and which have been collectively arranged as a group, are collected with a stacking order in the first window group being maintained such that the stacking order of the first window group is consecutively followed by a stacking order of the second window group (FIG. 26).

Therefore, the stacking order is not changed in the same group according to a display request, and thereby the loads of the application for managing the stacking order in the same group is reduced.

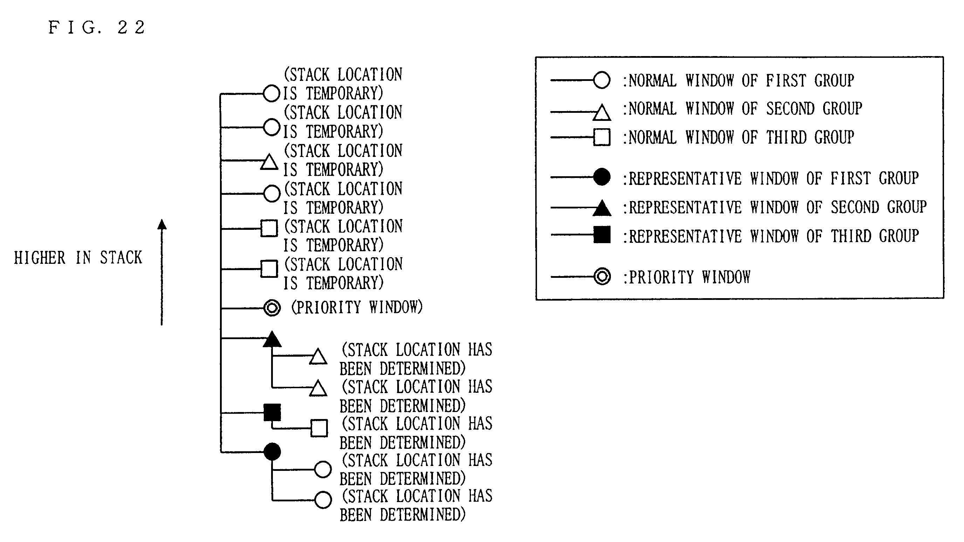

Further, a third invention of the present invention based on the first or second invention is directed to the window stack control method which further comprises a step for creating a representative window for each group and in which the collectively arranging step includes handling, when collectively arranging a window as a group so as to determine a stacking order of the window in the group, the window as a child window of the representative window (FIG. 22).

Therefore, shifting a stack in units of group and switching between the windows being displayed and being not displayed in units of group can be executed by controlling the representative window, and thereby the more windows the group has, the more processing loads can be reduced.

Further, a fourth invention of the present invention based on any of the first to third inventions is directed to the window stack control method which further comprises the steps of: receiving a request for shifting a top of a group in a window stack and a request for shifting a bottom of a group in a window stack, from the application program; and changing the stack in the group in response to the request for shifting the top or the request for shifting the bottom (S708, S710, S711, S1208, S1210 and S1211).

Therefore, the control of the stack is closed in a group, and thereby the respective application programs can change stack without concern for a window display performed by another application program.

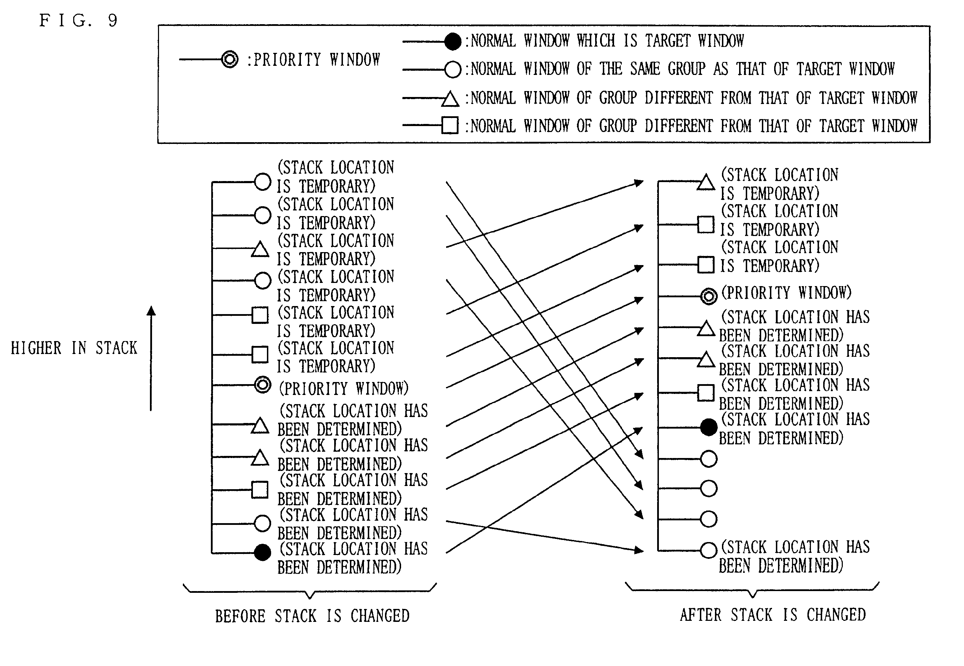

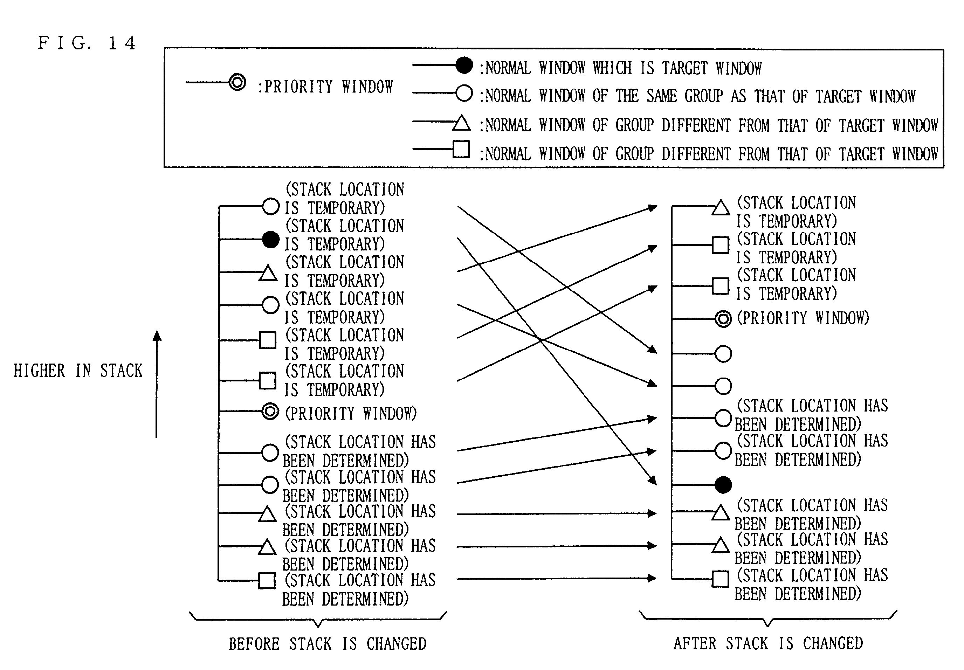

Further, a fifth invention of the present invention based on the fourth invention is directed to the window stack control method in which the stack changing step includes changing a stack so as to collect, when receiving, from the application program, the request for shifting the first window to a top of a group in a window stack and the request for shifting the first window to a bottom of a group in a window stack, a first window group of windows which belong to a same group as the first window and which are not collectively arranged as a group and a second window group of windows which belong to a same group as the first window and which have been collectively arranged as a group with a stacking order in the first window group being maintained such that the stacking order of the first window group is consecutively followed by a stacking order of the second window group (S708, FIG. 9 and S1208, FIG. 14).

Therefore, all the normal windows belonging to the same group as that of a target window of stack change are collectively arranged, and thereby the application programmore easily grasps the stacking order of the windows of a group having been set by themselves.

Further, a sixth invention of the present invention based on any of the first to third inventions is directed to the window stack control method which further comprises: a step for receiving a request for shifting a top in units of group in a window stack and a request for shifting a bottom in units of group in a window stack, from the application program, and a step for changing the stack in units of group in response to the request for shifting the top or the request for shifting the bottom (S1705, S1706, and S2004).

Therefore, the control of the windows can be executed by designating a group, and thereby, for example, in a case where a group is assigned to each application program, even when a member of a window belonging to the application is not known, all the normal windows belonging to the application can be shifted to the forefront of the stack.

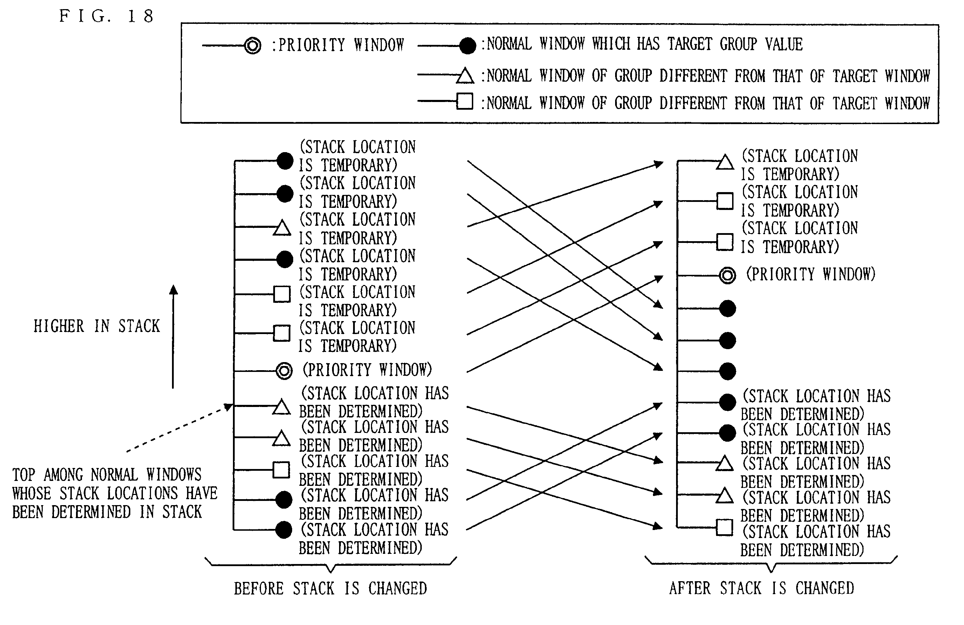

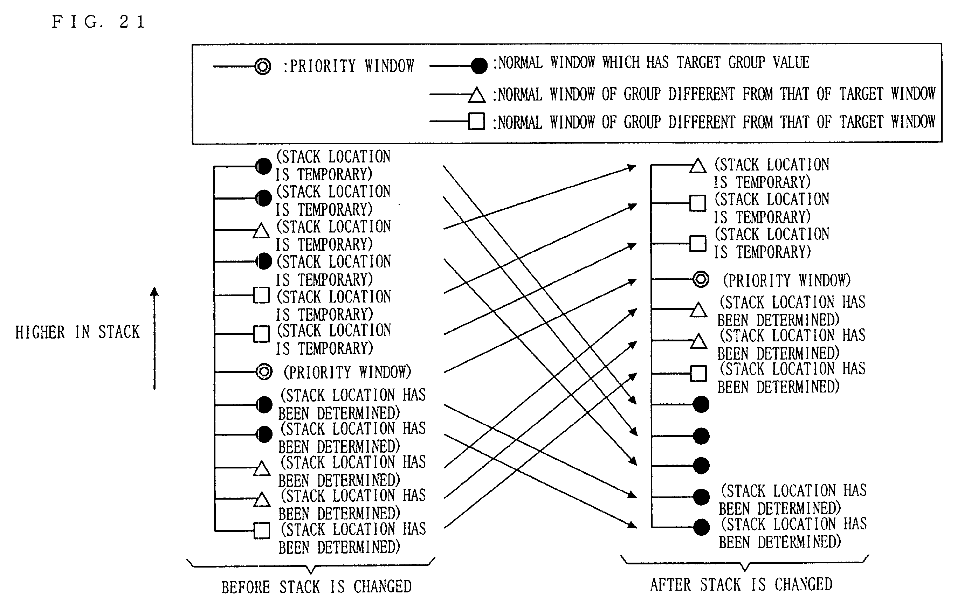

Further, a seventh invention of the present invention based on the sixth invention is directed to the window stack control method in which the stack changing step includes changing a stack so as to collect, when receiving, from the application program, the request for shifting a first group to a top in units of group in a window stack and the request for shifting a first group to a bottom in units of group in a window stack, a first window group of windows which belong to the first group and which are not collectively arranged as a group and a second window group of windows which belong to the first group and which have been collectively arranged as a group with a stacking order in the first window group being maintained such that the stacking order of the first window group is consecutively followed by a stacking order of the second window group (S1705, FIG. 18 and S2004, FIG. 21).

Therefore, all the normal windows belonging to a target group of stack change are collectively arranged with their stacking order being maintained among them and subjected to stack change, and thereby the application program can more easily grasp the stacking order of windows of a group having been set by themselves.

Further, an eighth invention of the present invention based on the first invention is directed to the window stack control method in which a window which is designated as a priority window by the application program is not caused to belong to any group and the priority window is caused to be always disposed higher in stack than all the windows which are displayed on a display unit and which belong to any of the groups.

Therefore, a window can be displayed regardless of a stacking order in units of group, and thereby a service of a window displayed with the highest priority can be provided.

Further, a ninth invention of the present invention based on the first invention is directed to the window stack control method in which a window disposed lower in stack than a window belonging to a group at the top is always in a state of non-display.

Therefore, even if a window and the like in a group disposed lower in stack than a group at the top is attempted to be displayed, the window and the like are not displayed on a display unit, and thereby there is no concern for halfway displaying a window on a portion which is not overlaid with the window of the group at the top.

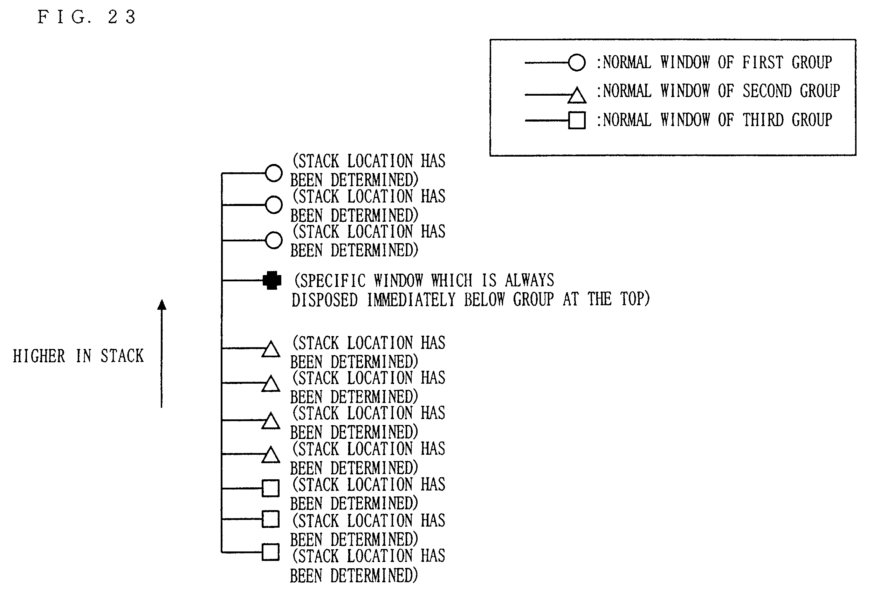

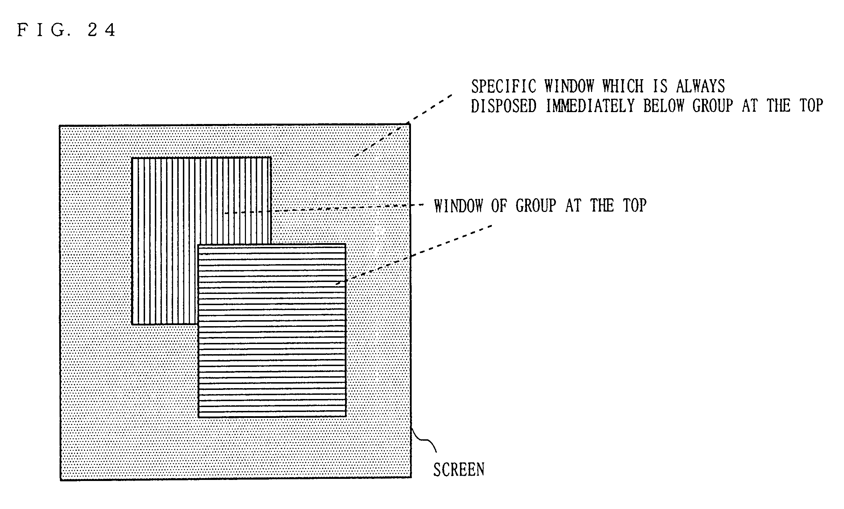

Further, a tenth invention of the present invention based on the first invention is directed to the window stack control method in which a specific window is disposed immediately below a window whose stacking order is the bottom among windows belonging to a group at the top (FIG. 23 and FIG. 24).

Therefore, for example, when the specific window is displayed to fill a screen on a display unit, even if a window and the like in the group disposed lower in stack than the specific window is attempted to be displayed, the window and the like are not displayed on the display unit. Thereby, there is no concern for halfway displaying a window on a portion which is not overlaid with the window in the group at the top.

Further, an eleventh invention of the present invention based on the fourth or sixth invention is directed to the window stack control method in which an X window system and a window manager manage a stack of a plurality of windows, and a specific window is disposed immediately above a group at the top.

Therefore, when a group at the top is replaced with another group, an XRestackWindows() function is used in the case of an X window system, and the XRestackWindows () function can be used to indicate the destination for the stack of the window group to shift. If no window is present higher in stack than a window of the group at the top, the order of arranging all the windows present should be determined to be assigned to an argument of the XRestackWindows (). However, in a case where there is the specific window, it is only required that the specific window and the window group are assigned to the argument.

Further, a twelfth invention of the present invention based on any of the first to third inventions is directed to the window stack control method in which an X window system and a window manager manage a stack of a plurality of windows, and the window manager confirms whether or not its recognized stack conforms to a stack recognized by the window system when receiving a window destruction notification, and, in the case of non-conformity, performs processing for conforming a stack recognized by the window system to a stack recognized by the window manager.

Therefore, the conformity is attempted to be ensured when a window destruction notification is received. Thereby, even when the window system fails in stack change processing, a fail in processing is eliminated.

Further, a thirteenth invention of the present invention based on any of the first to third inventions is directed to the window stack control method in which an X window system and a window manager manage a stack of a plurality of windows, and the window manager sets a flag when requesting the window system to change a stack, and confirms whether or not its recognized stack conforms to a stack recognized by the window system only when the flag is set at the reception of a window destruction notification, and, in the case of non-conformity, performs processing for conforming a stack recognized by the window system to a stack recognized by the window manager, thereby to put the flag down.

Therefore, only when the window manager executes a stack change, the processing for conformity of the stack recognition is performed, and therefore the frequency for executing processing can be reduced.

Further, a fourteenth invention of the present invention based on the first invention is directed to the window stack control method in which the collectively arranging step includes collecting, when a request for displaying a first window which is not collectively arranged as a group is received from the application program, the first window and a second window group of windows which belong to a same group as the first window and which have been collectively arranged as a group such that the stacking order of the first window is consecutively followed by a stacking order of the second window group (FIG. 4).

Further, a fifteenth invention of the present invention is directed to a window management program (104) for managing a stack of a plurality of windows which are displayed on a display unit (11) based on one or more application programs (101, 102, and 103), in which a computer (7) is operable to execute the steps of: designating a group of a window from the application program; receiving a request for displaying the window from the application program; and collectively arranging the window as a group so as to determine a stacking order of the window in the group when receiving the display request (S308 and FIG. 4).

Further, a sixteenth invention of the present invention is directed to a window management apparatus for managing, when displaying a plurality of windows on a display unit (11), a stack of the windows, which comprises: one or more application programs (101, 102, and 103) for displaying one or more windows on the display unit; a window management program (104) for managing a stack of the windows displayed by the one or more application programs; and a processing unit (8) for executing the application programs and the window management program, and in which the application program designates a group of a window with respect to the window management program, and the window management program performs control, when receiving a request for displaying a window from the application program and displaying the window, so as to collectively arrange the window as a group so as to determine a stacking order of the window in the group (S308 and FIG. 4).

### BRIEF DESCRIPTION OF THE DRAWINGS

FIG. 1 is a diagram illustrating an example of a configuration of a system for realizing a window stack control method according to a first embodiment of the present invention.
FIG.2 is a diagram illustrating an example of window information according to the first embodiment of the present invention.
FIG. 3 is a flow chart illustrating an example of an operation performed by a window manager when receiving a mapping request event (MapRequest) according to the first embodiment of the present invention.
FIG. 4 is a schematic diagram specifically exemplifying how the stack is changed according to a stack change request in step S308 shown in FIG. 3 according to the first embodiment of the present invention.
FIG. 5 is a schematic diagram specifically exemplifying how the stack is changed according to a stack change request in step S310 shown in FIG. 3 according to the first embodiment of the present invention.
FIG. 6 is a schematic diagram specifically exemplifying how the stack is changed according to a stack change request in step S311 shown in FIG. 3 according to the first embodiment of the present invention.
FIG. 7 is a flow chart illustrating an example of an operation performed by a window manager when receiving a stack top shifting request event according to the first embodiment of the present invention.
FIG. 8 is a schematic diagram specifically exemplifying how the stack is changed according to a stack change request in step S705 shown in FIG. 7 according to the first embodiment of the present invention.
FIG. 9 is a schematic diagram specifically exemplifying how the stack is changed according to a stack change request in step S708 shown in FIG. 7 according to the first embodiment of the present invention.
FIG. 10 is a schematic diagram specifically exemplifying how the stack is changed according to a stack change request in step S710 shown in FIG. 7 according to the first embodiment of the present invention.
FIG. 11 is a schematic diagram specifically exemplifying how the stack is changed according to a stack change request in step S711 shown in FIG. 7 according to the first embodiment of the present invention.
FIG. 12 is a flow chart illustrating an example of an operation performed by a window manager when receiving a stack bottom shifting request event according to the first embodiment of the present invention.
FIG. 13 is a schematic diagram specifically exemplifying how the stack is changed according to a stack change request in step S1205 shown in FIG. 12 according to the first embodiment of the present invention.
FIG. 14 is a schematic diagram specifically exemplifying how the stack is changed according to a stack change request in step S1208 shown in FIG. 12 according to the first embodiment of the present invention.
FIG. 15 is a schematic diagram specifically exemplifying how the stack is changed according to a stack change request in step S1210 shown in FIG. 12 according to the first embodiment of the present invention.
FIG. 16 is a schematic diagram specifically exemplifying how the stack is changed according to a stack change request in step S1211 shown in FIG. 12 according to the first embodiment of the present invention.
FIG. 17 is a flow chart illustrating an example of an operation performed by a window manager when receiving a message of a request for shifting a top in units of group in a stack according to the first embodiment of the present invention.
FIG. 18 is a schematic diagram specifically exemplifying how the stack is changed according to a stack change request in step S1705 shown in FIG. 17 according to the first embodiment of the present invention.
FIG. 19 is a schematic diagram specifically exemplifying how the stack is changed according to a stack change request in step S1706 shown in FIG. 17 according to the first embodiment of the present invention.
FIG. 20 is a flowchart illustrating an example of an operation performed by a window manager when receiving a message of a request for shifting a bottom in units of group in a stack according to the first embodiment of the present invention.
FIG. 21 is a schematic diagram specifically exemplifying how the stack is changed according to a stack change request in step S2004 shown in FIG. 20 according to the first embodiment of the present invention.
FIG. 22 is a schematic diagram illustrating an example of a stack state in the case of using a representative window according to the first embodiment of the present invention.
FIG. 23 is a schematic diagram illustrating an example of a stack state in the case of using a specific window which is created and mapped by a window management program and is disposed immediately below a window whose stacking order is the bottom among all the windows belonging to a group at the top according to the first embodiment of the present invention.
FIG. 24 is a schematic diagram illustrating an example of a screen display in the case of using the specific window which is created and mapped by the window management program and which is disposed immediately below the window whose stacking order is the bottom among all the windows belonging to the group at the top according to the first embodiment of the present invention.
FIG. 25 is a flowchart illustrating an example of an operation performed by a window manager when receiving a mapping request event (MapRequest) according to a second embodiment of the present invention.
FIG. 26 is a schematic diagram specifically exemplifying how the stack is changed according to a stack change request in step S2510 shown in FIG. 25 according to the second embodiment of the present invention.
FIG. 27 is a schematic diagram specifically exemplifying how the stack is changed according to a stack change request in step S2512 shown in FIG. 25 according to the second embodiment of the present invention.
FIG. 28 is a schematic diagram specifically exemplifying how the stack is changed according to a stack change request in step S2513 shown in FIG. 25 according to the second embodiment of the present invention.
FIG. 29 is a schematic diagram illustrating an example of a display in the case of displaying five windows in total on a screen as a display unit by three kinds of applications which operate on a computer according to a conventional art.
FIG. 30 is a schematic diagram illustrating an example of a window stacking order according to a conventional art.
FIG. 31 is a schematic diagram illustrating an example of a window stacking order according to a conventional art.

### BEST MODE FOR CARRYING OUT THE INVENTION

Hereinafter, embodiments of the present invention will be described with reference to the drawings.

### (Embodiment 1)

In this embodiment, a case where a window management program comprises an X window system and a window manager, and the window manager controls a stacking order of top level windows which are child windows of a root window, will be taken as an example.

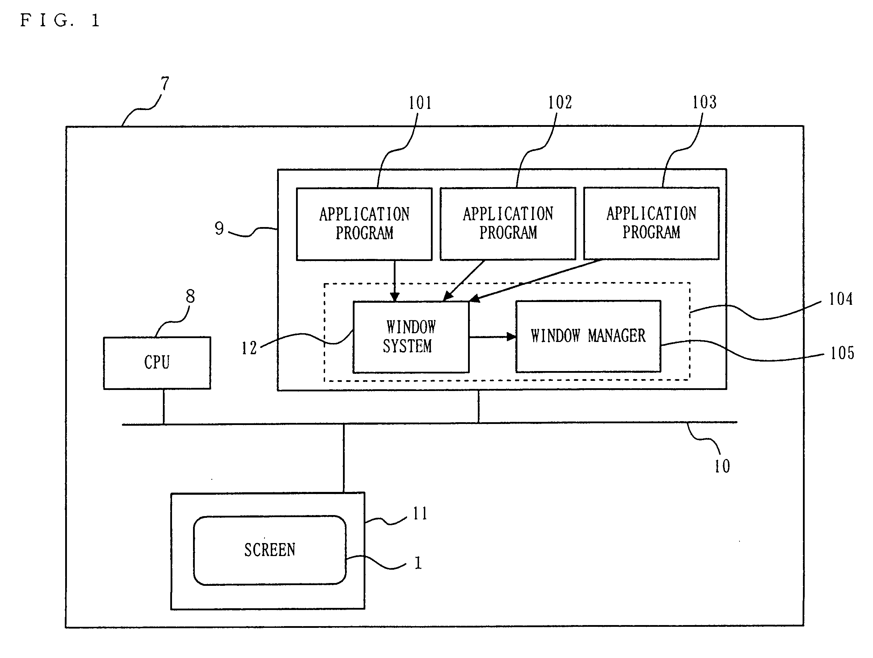

FIG.1 shows an example of a configuration of a system for realizing a window stack control method according to a first embodiment of the present invention.

In FIG. 1, a reference numeral 7 denotes a computer. A reference numeral 8 denotes a CPU (Central Processing Unit). A reference numeral 9 denotes a memory for storing various programs, processed data, and the like. A reference numeral 10 denotes a bus for allowing the respective components to perform desired bi-directional communication. A reference numeral 11 denotes a display unit such as a CRT monitor or a liquid crystal monitor. A reference numeral 1 denotes a screen of the display unit 11. Reference numerals 101, 102 and 103 denote programs executed by the CPU 8, which are application programs which attempt to display one or more windows on the screen 1 through a window management program 104. A reference numeral 104 denotes a program executed by the CPU 8, which is a window management program for managing windows which the application programs 101 to 103 attempt to display, and displaying the windows through the bus 10. The window management program 104 includes a window system 12 and a window manager 105. The window system 12 is a conventional X window system and the reference numeral 105 denotes a window manager.

Hereinafter, an operation of this embodiment will be described with reference to the drawings.

Each of the application programs 101, 102, and 103 can display two types of top level windows having different stack control characteristics from each other through the window management program 104. The two types of windows are called a normal window and a priority window. They are different in that the displayed priority window is always positioned higher in stack than all the displayed normal windows, thereby to be displayed, and in that while the normal windows are collectively arranged as a group so as to determine a stacking order of the windows in the group, this processing is performed with involving no priority window.

### <Window creation request, window type and group setting request, and mapping request>

In a case where the application programs 101, 102, and 103 display windows, the programs 101, 102 and 103 issue, to the window system 12, a window creation request, a window type and group setting request, and a mapping request. Among them, as to the window type and group setting request, in the case of an X window system, values can be set for each window by using a property function.

The respective windows are not displayed on the screen 1 until the processes of window creation and mapping are performed.

When the window system 12 receives a window creation request, it positions the window at the top of a stacking order which is an order of stacking windows and issues a window creation notification event (CreateNotify) to the window manager 105.

The window manager 105 stores the window information as an internal data base for each window.

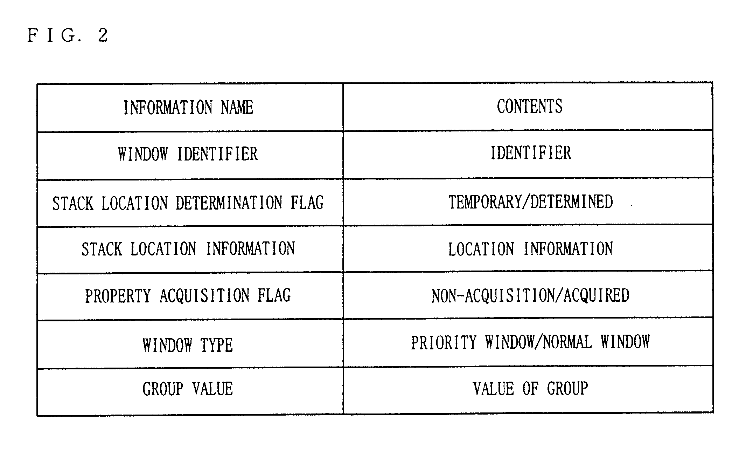

FIG. 2 shows an example of the window information.

As shown in FIG. 2, the window information includes a window identifier, a stack location determination flag, stack location information, a property acquisition flag, a window type, and a group value. The window identifier identifies a window having the window information. The stack location determination flag indicates whether the window has a temporary stack location or a determined stack location for the window manager 105. The stack location information indicates a stack location of the window. The property acquisition flag indicates whether or not the window manager 105 has acquired a window type and a group value of the window. The window type indicates whether the window is a priority window or a normal window in a case where the property acquisition flag indicates "acquired". The group value indicates a group value of the window in a case where the property acquisition flag indicates "acquired".

The window manager 105 shown in FIG. 1 knows that a window has been newly created by receiving a window creation notification event (CreateNotify) and acquires a window identifier from the window creation notification event (CreateNotify). Then, a window information storage area is newly established in the internal data base, and the window identifier of the window information is stored therein. Further, as to the window, the window manager 105 initializes the stack location determination flag as "temporary", the stack location information as "top of stack", and the property acquisition flag as "not acquired".

Next, the window system 12 receives a window type and group setting request and stores the same as a property of the window.

Next, the window system 12 receives mapping requests from the application programs 101, 102 and 103, performs no internal processing particularly, and issues a mapping request event (MapRequest) to the window manager 105.

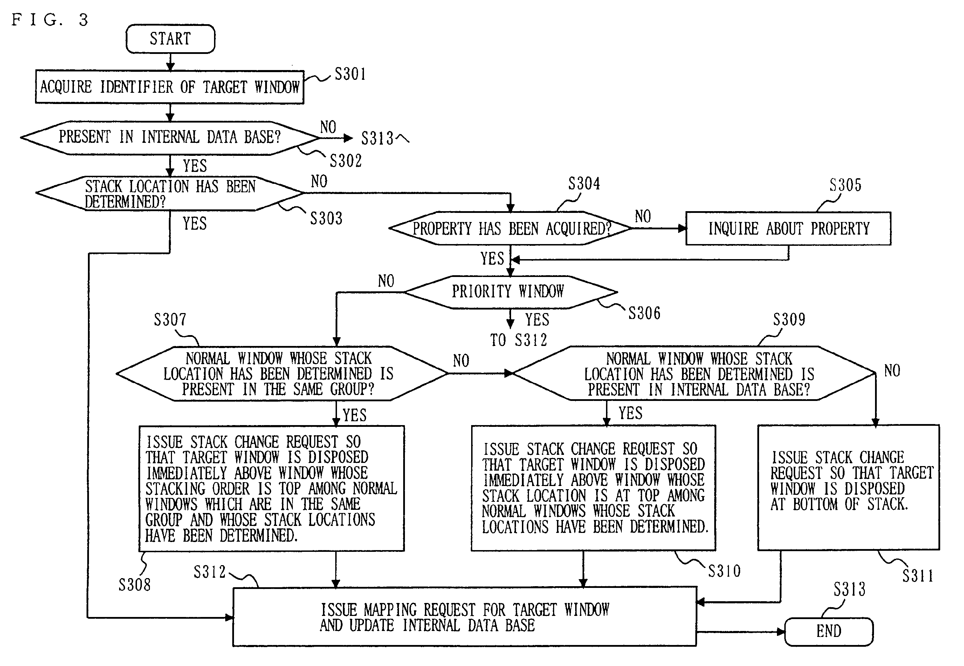

FIG. 3 shows a flow chart illustrating an example of an operation which is performed by the window manager 105 when receiving a mapping request event (MapRequest).

As shown in FIG. 3, in step S301, the window manager 105 acquires an identifier of a target window to be mapped (hereinafter, merely referred to as a target window) from the mapping request event (MapRequest) which is received at the time, and proceeds to step S302.

In step S302, the internal data base is searched for the identifier of the target window. When the corresponding window information is present, the procedure proceeds to step S303, and when it is not present, the procedure proceeds to step S313.

In step S303, it is checked in the internal data base whether or not the stack location determination flag of the target window indicates "determined". When the stack location is determined, the procedure proceeds to step S312, and when the stack location is temporary, the procedure proceeds to step S304.

In step S304, the property acquisition flag of the target window is checked, and when the property acquisition flag indicates "acquired", the procedure proceeds to step S306 and in the case of non-acquisition, the procedure proceeds to step S305.

In step S305, the window type and the group value of the target window are inquired of the window system 12 to acquire the same, and are stored in the internal data base, and the procedure proceeds to step S306.

In step S306, the window type of the target window is checked and in the case of a priority window, the procedure proceeds to step S312, and in the case of a normal window, the procedure proceeds to step S307.

In step S307, the internal data base is checked for a normal window which has the same group value as the target window and whose stack location determination flag indicates "determined". When the normal window is present, the procedure proceeds to step S308, and when it is absent, the procedure proceeds to step S309.

In step S308, a stack change request is issued to the window system 12 so that the stack location of the target window is disposed immediately above the window whose stacking order is the top among the normal windows which are in the same group and whose stack locations are determined.

FIG.4 shows a schematic diagram specifically exemplifying how the stack is changed according to the stack change request in step S308.

As shown in FIG. 4, it can be seen that the target window which is a normal window is shifted to immediately above the window whose stacking order is the top among the windows which have the same group value as the target window and whose stack location determination flags indicate "determined".

In step S309, all the normal windows in the internal data base are searched for a window whose stack location determination flag indicates "determined". When the window is present, the procedure proceeds to step S310 and when the window is not present, the procedure proceeds to step S311.

In step S310, a stack change request is issued to the window system 12 so that the target window is disposed immediately above the window whose stacking order is the top among the normal windows which are in the internal data base and whose stack location determination flags indicate "determined", and the procedure proceeds to step S312.

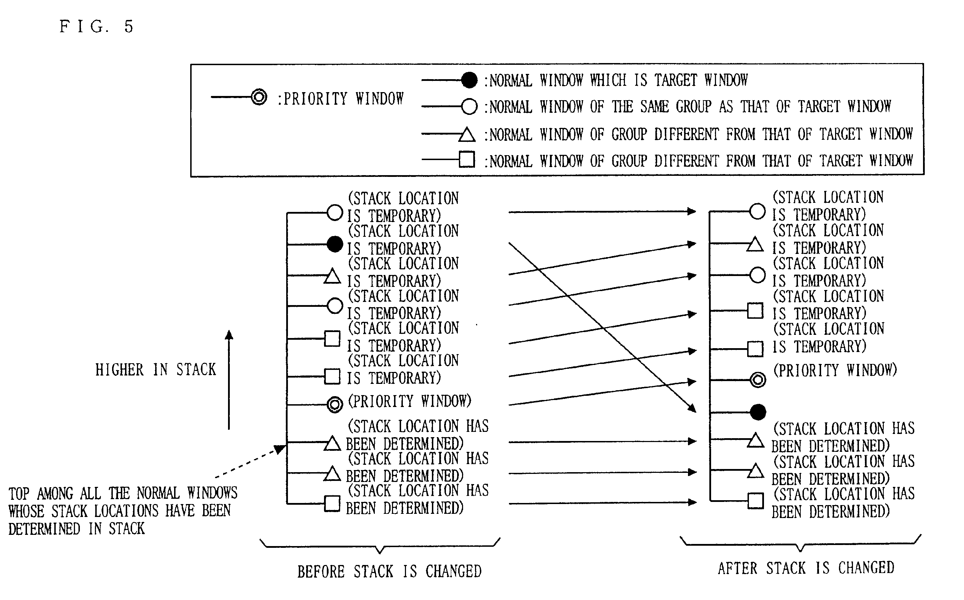

FIG.5 shows a schematic diagram specifically exemplifying how the stack is changed according to the stack change request in step S310.

As shown in FIG. 5, it can be seen that the target window which is a normal window is shifted to immediately above the window whose stacking order is the top among all the normal windows whose stack location determination flags indicate "determined".

In step S311, a stack change request is issued to the window system 12 so that the target window is disposed at the bottom among the stack locations, and the procedure proceeds to step S312.

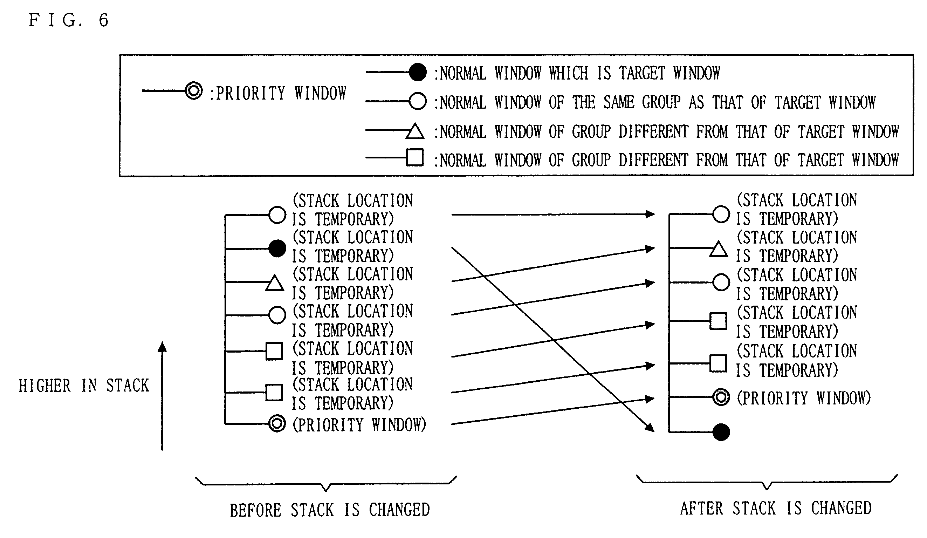

FIG.6 shows a schematic diagram specifically exemplifying how the stack is changed according to the stack change request in step S311.

As shown in FIG. 6, it can be seen that the target window which is a normal window is shifted to the bottom of the stack.

In step S312, a mapping request for the target window is issued to the window system 12, and when the stack location determination flag among the window information of the target window in the internal data base, indicates "temporary", the stack location determination flag is updated so as to indicate "determined". Further, the stack location information is updated throughout the whole internal data base as necessary and then the procedure proceeds to step S313.

In step S313, the processing is completed.

When the window system 12 receives, from the window manager 105, a stack change request created in step S308, step S310, or step S311 shown in FIG. 3, the window system 12 changes the stacking order of the windows according to the request. Further, when a mapping request created in step S312 shown in FIG. 3 is received from the window manager 105, the window is mapped according to the request. The mapped window is displayed on the screen 1 when the mapped window is not hidden below other windows, although it depends on how much the windows overlap each other.

Through the processing shown in FIG. 3, as to the normal windows which are created and for which window types and groups are set by the applications 101, 102, and 103, the stack location informations are always determined before the normal windows are displayed. Moreover, the stack locations are collectively arranged as a group, and further the window is prevented from being displayed higher in stack than the priority window. In addition, the priority window has the stack location unchanged for display.

### <Request for shifting top of group in stack>

In FIG. 1, as a stack change request, the application programs 101, 102, and 103 can issue, to the window system 12, a request for shifting, to the top of a group in a stack, a normal window which is created and for which a window type and a group are set. In the case of an X window system, for example, an XRaiseWindow () function may be used for the request for shifting the top of a group in a stack. Further, a request for shifting a priority window to the top among priority windows in a stack can be issued to the window system 12 as a stack change request. For example, the same XRaiseWindow() function as is used for the request for shifting the top of a group in a stack may be used.

In a case where the application program executes the XRaiseWindow (), the window system 12 does not change a stack, and issues a stack top shifting request event (ConfigureRequest) to the window manager 105.

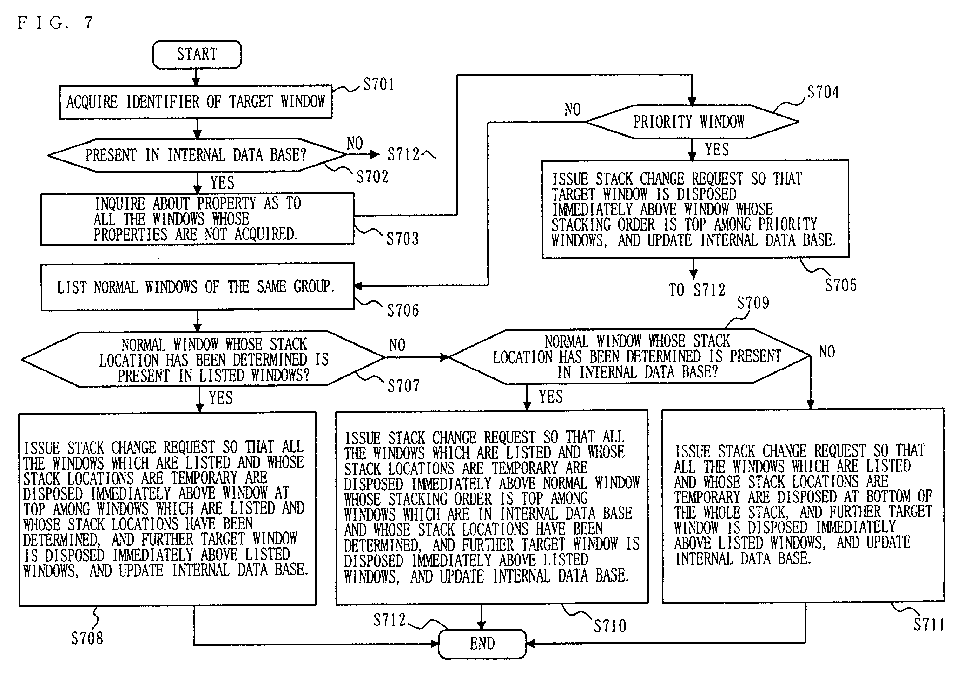

FIG. 7 shows a flow chart illustrating an example of an operation which is performed by the window manager 105 when receiving the stack top shifting request event.

As shown in FIG. 7, in step S701, an identifier of a target window is acquired from the stack top shifting request event (ConfigureRequest) which is received at the time and the procedure proceeds to step S702.

In step S702, the internal data base is searched for the identifier of the target window. When the corresponding data is present, the procedure proceeds to step S703 and when it is not present, the procedure proceeds to step S712.

In step S703, the window types and the group values as to all the windows which are in the internal data base and whose property acquisition flags indicate "non-acquisition" are inquired of the window system 12. As to the windows for which the window types and the group values have been able to be acquired, the window types and group values, and the fact that the property has been acquired are stored in the internal data base, and the procedure proceeds to step S704.

In step S704, the window type of the target window is checked, and when the window type is a priority window, the procedure proceeds to step S705 and when it is a normal window, the procedure proceeds to step S706.

In step S705, the internal data base is searched for a window whose stacking order is the top among the windows whose window types are priority windows. Then, a stack change request is issued to the window system 12 so that the target window is disposed immediately above the window whose stacking order is the top among the priority windows. Next, the stack location information is updated throughout the whole internal data base, and then the procedure proceeds to step S712. Then, in a case where a window at the top of the stack is the target window itself as a result of the searching, nothing is performed and the procedure proceeds to step S712.

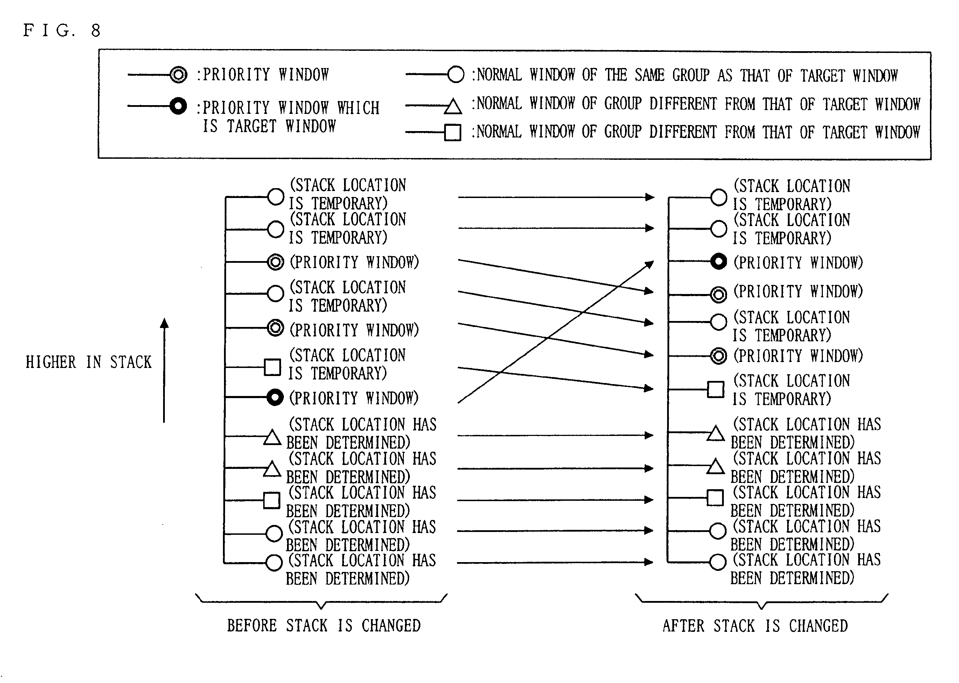

FIG. 8 shows a schematic diagram specifically exemplifying how the stack is changed according to the stack change request in step S705.

As shown in FIG. 8, it can be seen that only the target window is shifted to immediately above the window whose stacking order is the top among the priority windows.

In FIG. 7, in step S706, the internal data base is searched for normal windows which belong to the same group as that of the target window for listing, and the procedure proceeds to step S707.

When in step S707 a window whose stack location determination flag indicates "determined" is present in the listed windows, the procedure proceeds to step S708, and when it is not present, the procedure proceeds to step S709.

In step S708, when a window whose stack location determination flag indicates "temporary" is present in the listed windows, a stack change request is issued to the window system 12 so that all the windows which are listed and are "temporary" are disposed, with their stacking order remaining unchanged among them, immediately above the window at the top among the windows which are among listed windows and whose stack location determination flags indicate "determined", and further the target window is disposed at the top among the listed windows. Next, when a window whose stack location determination flag indicate "temporary" is present in the listed windows, the stack location of the window is updated as having been determined. Moreover, the stack location information is updated throughout the whole internal data base, and then the procedure proceeds to step S710.

FIG.9 shows a schematic diagram specifically exemplifying how the stack is changed according to the stack change request in step S708.

As shown in FIG. 9, it can be seen that the windows which have the same group value as the target window and whose stack location determination flags indicate "temporary" are shifted to immediately above the window which has the same group value and whose stack location determination flag indicates "determined", and the target window is shifted to the top among all the windows having the same group value in the stack.

In FIG. 7, when in step S709 a window whose stack location determination flag indicates "determined" is present in the internal data base, the procedure proceeds to step S710, and when it is not present, the procedure proceeds to step S711.

In step S710, a stack change request is issued to the window system 12 so that all the windows which are listed in step S706 and whose stack location determination flags indicate "temporary" are disposed, with their stacking order remaining unchanged among them, immediately above the normal window whose stacking order is the top among windows which are in the internal data base and whose stack location determination flags indicate "determined", and further the target window is disposed at the top among the listed windows. Then, the stack location determination flags of the listed windows are updated so as to indicate "determined". Moreover, the stack location information is updated throughout the whole internal data base, and then the procedure proceeds to step S712.

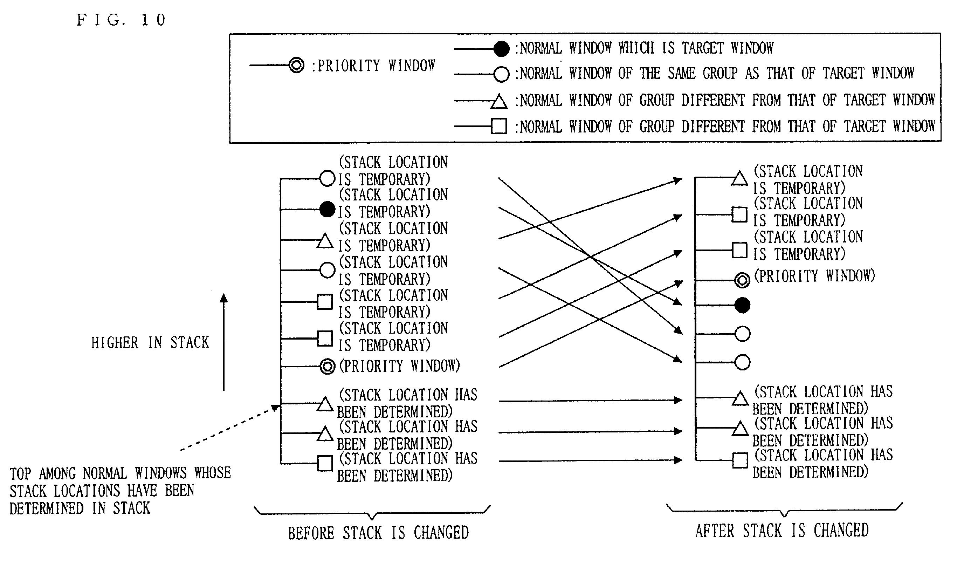

FIG. 10 shows a schematic diagram specifically exemplifying how the stack is changed according to the stack change request in step S710.

As shown in FIG. 10, it can be seen that the normal windows which have the same group value as the target window and whose stack location determination flags indicate "temporary" are shifted to immediately above the window whose stacking order is the top among all the normal windows whose stack location determination flags indicate "determined", and the target window is shifted to the top among all the windows having the same group value in the stack.

In FIG. 7, in step S711, a stack change request is issued to the window system 12 so that all the windows which are listed in step S706 and whose stack location determination flags indicate "temporary" are disposed, with their stacking order remaining unchanged among them, at the bottom of the whole stack and further the target window is disposed at the top among the listed windows. Next, the stack location determination flags of the listed windows are updated so as to indicate "determined", and further the stack location information is updated throughout the whole internal data base, and then the procedure proceeds to step S712.

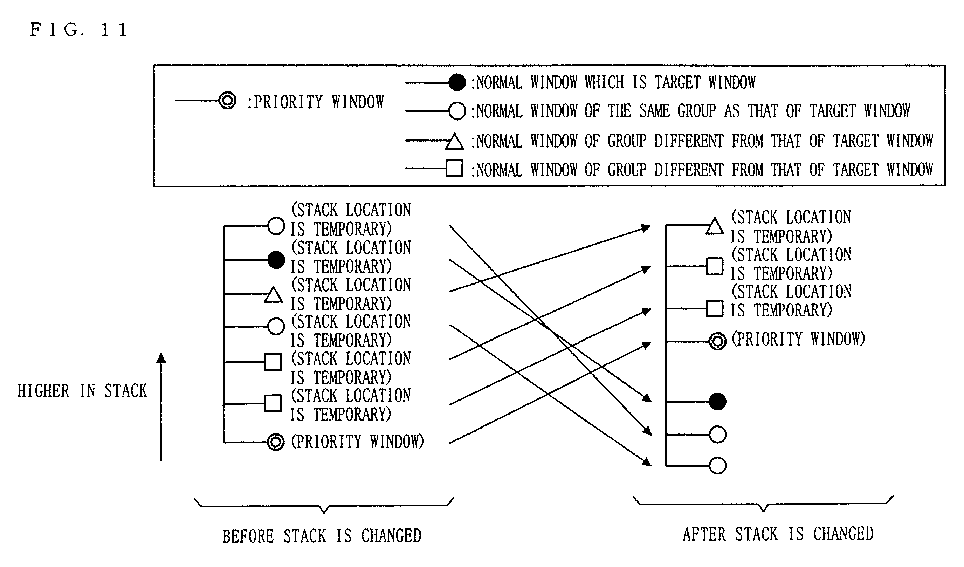

FIG. 11 shows a schematic diagram specifically exemplifying how the stack is changed according to the stack change request in step S711.

As shown in FIG. 11, it can be seen that the normal windows which have the same group value as the target window and whose stack location determination flags indicate "temporary" are shifted to the bottom of the stack and the target window is shifted to the top among all the normal windows having the same group value in the stack.

In FIG. 7, in step S712, the processing is completed.

### <Request for shifting bottom of group in stack>

In FIG. 1, the application programs 101, 102, and 103 can issue, to the window system 12, a request for shifting, to the bottom of a group in a stack, a window which is created and for which a window type and a group are set. In the case of an X window system, for example, an XLowerWindow() function may be used for the request for shifting the bottomof a group in a stack. Further, a request for shifting a priority window to the bottom among priority windows in a stack can be issued to the window system 12 as a stack change request. For example, the same XLowerWindow() function as is used for the request for shifting the bottom of a group in a stack may be used.

In a case where the application program executes the XLowerWindow(), the window system 12 does not change a stack, and issues a stack bottom shifting request event (ConfigureRequest) to the window manager 105.

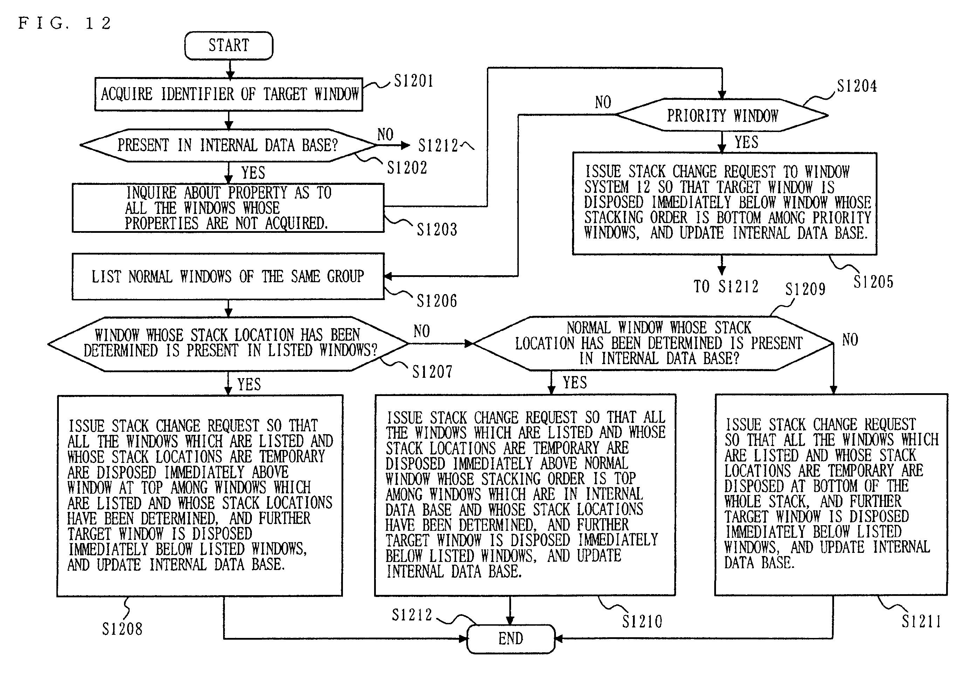

FIG. 12 shows a flow chart illustrating an example of an operation which is performed by the window manager 105 when receiving the stack bottom shifting request event.

As shown in FIG. 12, in step S1201, an identifier of a target window is acquired from the stack bottom shifting request event (ConfigureRequest) which is received at the time and the procedure proceeds to Step S1202.

In step S1202, the internal data base is searched for the identifier of the target window. When the corresponding data is present, the procedure proceeds to step S1203 and when it is not present, the procedure proceeds to step S1212.

In step S1203, the window types and the group values as to all the windows which are in the internal data base and whose property acquisition flags indicate "non-acquisition" are inquired of the window system 12. As to the windows for which the window types and the group values have been able to be acquired, the window types and the group values, and the fact that the property has been acquired are stored in the internal data base, and the procedure proceeds to step S1204.

In step S1204, the window type of the target window is checked, and when the window type is a priority window, the procedure proceeds to step S1205 and when it is a normal window, the procedure proceed to step S1206.

In step S1205, the internal data base is searched for a window at the bottom among the windows whose window types are priority window in the stack. Then, a stack change request is issued to the window system 12 so that the target window is disposed immediately below the window whose stacking order is the bottom among priority windows. Next, the stack location information is updated throughout the whole internal data base, and then the procedure proceeds to step S1212. Then, in a case where a window at the bottom of the stack is the target window itself as a result of the searching, nothing is performed and the procedure proceeds to step S1212.

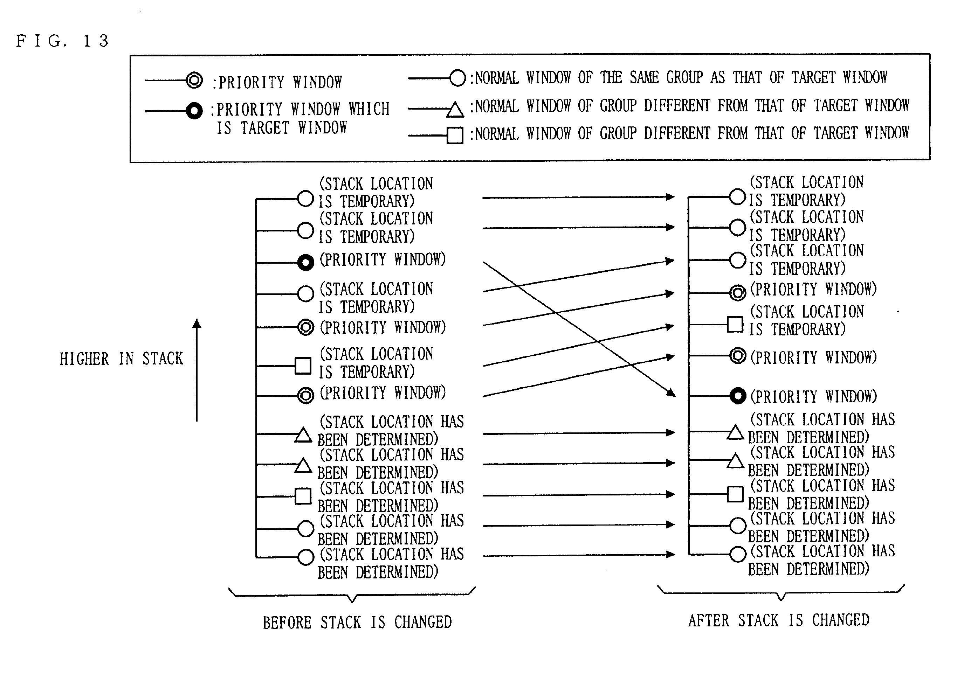

FIG. 13 shows a schematic diagram specifically exemplifying how the stack is changed according to the stack change request in step S1205.

As shown in FIG. 13, it can be seen that only the target window is shifted to immediately below the window whose stacking order is the bottom among the priority windows.

In FIG. 12, in step S1206, the internal data base is searched for the normal windows which belong to the same group as the target window for listing, and the procedure proceeds to step S1207.

When in step S1207 a window whose stack location determination flag indicates "determined" is present in the listed windows, the procedure proceeds to step S1208, and when it is not present, the procedure proceeds to step S1209.

In step S1208, when a window whose stack location determination flag indicates "temporary" is present in the listed windows, a stack change request is issued to the window system 12 so that all the windows which are listed and are "temporary" are disposed, with their stacking order remaining unchanged among them, immediately above the window at the top among the windows which are among the listed windows and whose stack location determination flags indicate "determined", and further the target window is disposed at the bottom among the listed windows. Next, when a window whose stack location determination flag indicates "temporary" is present in the listed windows, the stack location of the window is updated as having been determined. Moreover, the stack location information is updated throughout the whole internal data base, and then the procedure proceeds to step S1212.

FIG. 14 shows a schematic diagram specifically exemplifying how the stack is changed according to the stack change request in step S1208.

As shown in FIG. 14, it can be seen that the normal windows which have the same group value as the target window and whose stack location determination flags indicate "temporary" are shifted to immediately above the normal windows which have the same group value and whose stack location determination flags indicate "determined", and the target window is shifted to the bottom among all the normal windows having the same group value in the stack.

In FIG. 12, when in step S1209 a normal window whose stack location determination flag indicates "determined" is present in the internal data base, the procedure proceeds to step S1210, and when it is not present, the procedure proceeds to step S1211.

In step S1210, a stack change request is issued to the window system 12 so that all the windows which are listed in step S1206 and whose stack location determination flags indicate "temporary" are disposed, with their stacking order remaining unchanged among them, immediately above the normal window whose stacking order is the top among windows which are in the internal data base and whose stack location determination flags indicate "determined", and further the target window is disposed at the bottom among the listed windows. Next, the stack location determination flags of the listed windows are updated so as to indicate "determined". Moreover, the stack location information is updated throughout the whole internal data base, and then the procedure proceeds to step S1212.

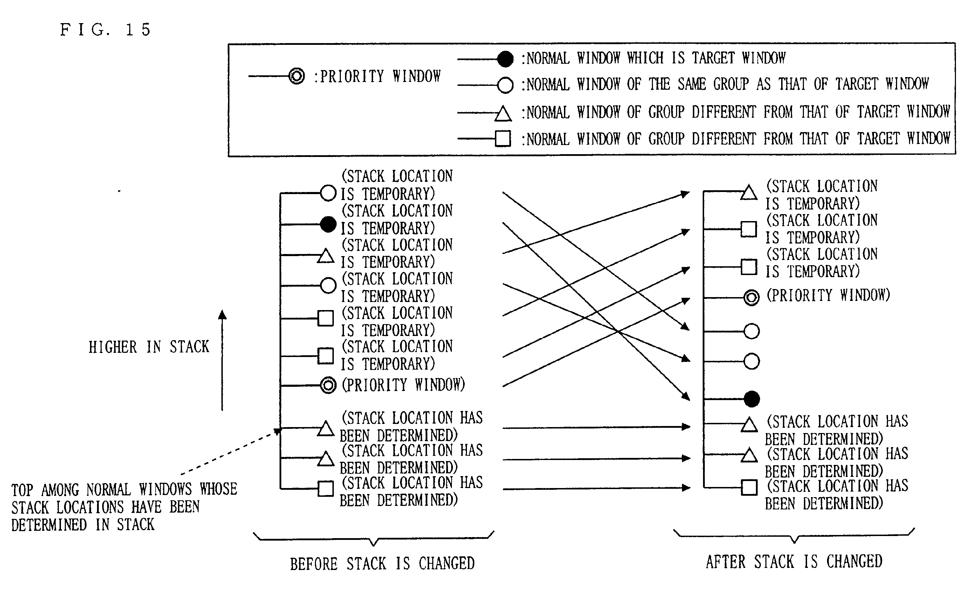

FIG.15 shows a schematic diagram specifically exemplifying how the stack is changed according to the stack change request in step S1210.

As shown in FIG. 15, it can be seen that the normal windows which have the same group value as the target window and whose stack location determination flags indicate "temporary" are shifted to immediately above the window whose stacking order is the top among all the normal windows whose stack location determination flags indicate "determined", and the target window is shifted to the bottom among all the windows having the same group value in the stack.

In FIG. 12, in step S1211, a stack change request is issued to the window system 12 so that all the windows which are listed in step S1206 and whose stack location determination flags indicate "temporary" are disposed, with their stacking order remaining unchanged among them, at the bottom of the whole stack, and further the target window is disposed at the bottom among the listed windows. Next, the stack location determination flags of the listed windows are updated so as to indicate "determined", and further the stack location information is updated throughout the whole internal data base, and then the procedure proceeds to step S1212.

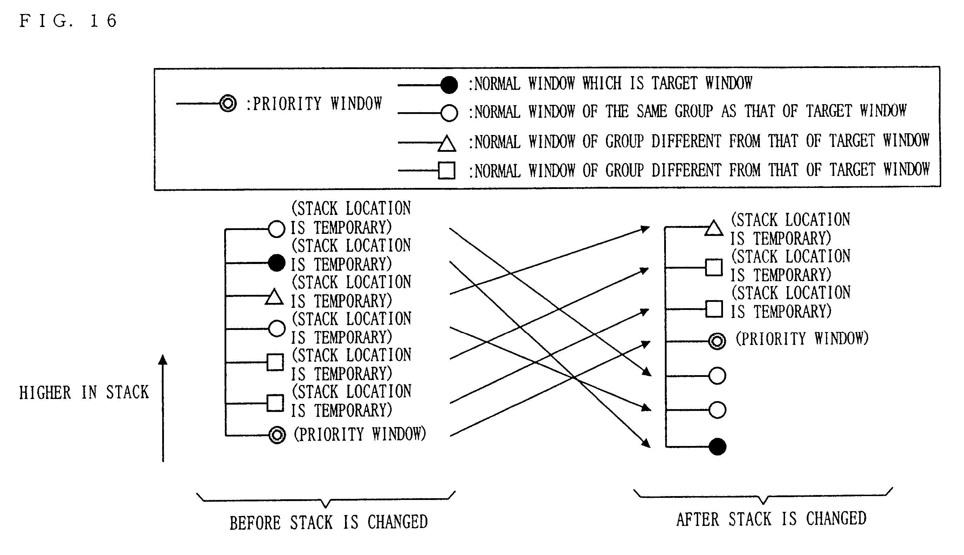

FIG. 16 shows a schematic diagram specifically exemplifying how the stack is changed according to the stack change request in step S1211.

As shown in FIG. 16, it can be seen that the normal windows which have the same group value as the target window and whose stack location determination flags indicate "temporary" are shifted to the bottom of the stack and the target window is shifted to the bottom among all the normal windows having the same group value in the stack.

In FIG. 12, in step S1212, the processing is completed.

### <Request for shifting top in units of group in stack>

In FIG. 1, the application programs 101, 102, and 103 can issue, to the window system 12, a request for shifting normal windows which are created and for which window types and groups are set, to the top in units of group in the stack. In the case of an X window system, for example, the request can be easily realized by using a client message structure. Hereinafter, a message of a request for shifting the top in units of group in a stack, which is issued to the window system 12 using the client message, is called a message of a request for shifting the top in units of group in a stack. The message of a request for shifting the top in units of group in a stack contains a group value of a group which is desired to be shifted (target group).

In a case where the application programs 101, 102, and 103 issue messages for requests for shifting the top in units of group in a stack (ClientMessage), the messages are transmitted to the window manager 105 through the window system 12.

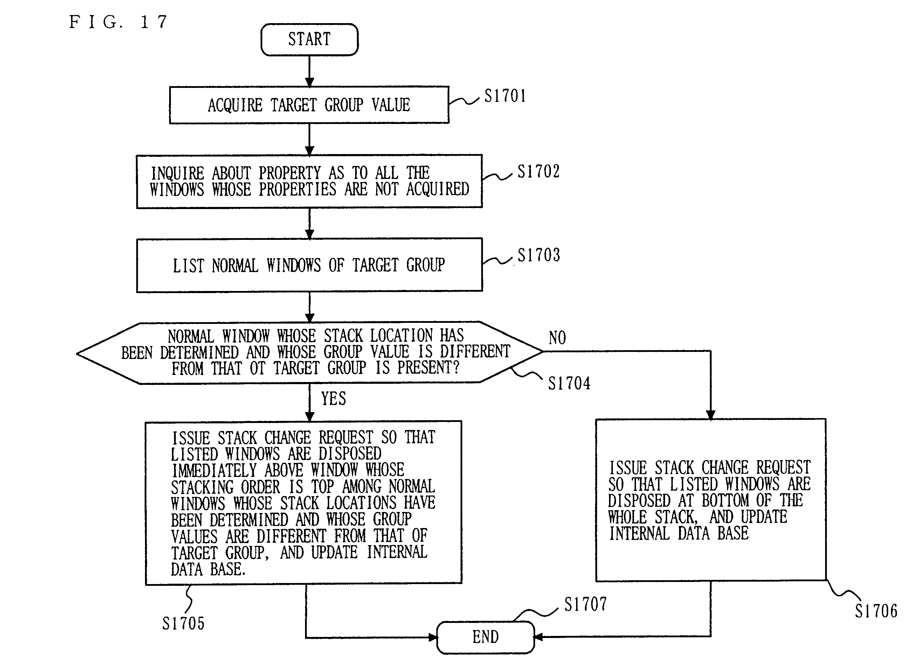

FIG. 17 shows a flow illustrating an example of an operation which is performed by the window manager 105 when receiving a message of a request for shifting the top in units of group in a stack.

As shown in FIG. 17, in step S1701, a target group value is acquired from a message of a request for shifting the top in units of group in a stack (ClientMessage) which is received at the time, and the procedure proceeds to step S1702.

In step S1702, the window types and the group values as to all the windows which are in the internal data base and whose property acquisition flags indicate "non-acquisition" are inquired of the window system 12, and for the windows whose window types and group values have been able to be acquired, the window types and the group values, and the fact that the property has been acquired are stored in the internal data base and the procedure proceeds to step S1703.

In step S1703, the internal data base is searched for information of the normal windows having the target group value for listing, and the procedure proceeds to step S1704.

In step S1704, when a normal window whose stack location determination information indicates "determined" and which has a different group value information from the target group value is present in the internal data base, the procedure proceeds to step S1705, and when it is not present, the procedure proceeds to step S1706.

In step S1705, a stack change request is issued to the window system 12 so that the listed windows are disposed, with their stacking order remaining unchanged among them, immediately above the window whose stacking order is the top among normal windows which are in the internal data base and whose stack location determination flags indicate "determined" and which have different group value information from the target group value. Next, when a window whose stack location determination flag indicates "temporary" is present in the listed windows, the stack location of the window is updated so as to be "determined". Moreover, the stack location information is updated throughout the whole internal data base, and then the procedure proceeds to step S1707.

FIG.18 shows a schematic diagram specifically exemplifying how the stack is changed according to the stack change request in step S1705.

As shown in FIG. 18, it can be seen that the normal windows having a target group value are shifted to immediately above the window whose stacking order is the top among all the normal windows whose stack location determination flags indicate "determined" and which have different group value information from the target group value.

In step S1706 shown in FIG. 17, a stack change request is issued to the window system 12 so that the listed windows are disposed, with their stacking order remaining unchanged among them, at the bottom of the whole stack. Next, when a window whose stack location determination flag indicates "temporary" is present in the listed windows, the stack location of the window is updated so as to be "determined". Moreover, the stack location information is updated throughout the whole internal data base, and then the procedure proceeds to step S1707.

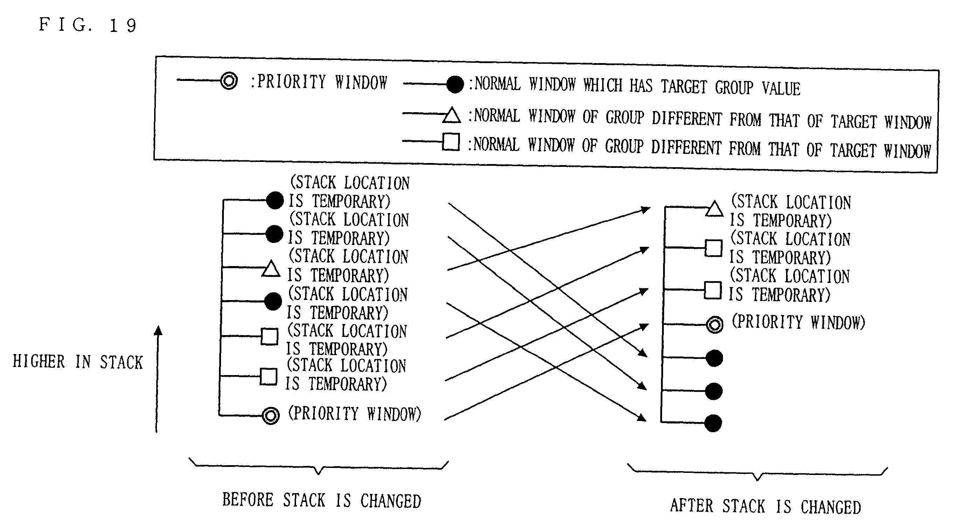

FIG.19 shows a schematic diagram specifically exemplifying how the stack is changed according to the stack change request in step S1706.

As shown in FIG.19, it can be seen that the normal windows having the target group value are shifted to the bottom of the whole stack.

In FIG. 17, in step S1707, the processing is completed.

### <Request for shifting bottom in units of group in stack>

In FIG. 1, the application programs 101, 102, and 103 can issue, to the window system 12, a request for shifting normal windows which are created and for which window types and groups are set, to the bottom in units of group in a stack. In the case of an X window system, for example, the request can be easily realized by using a client message structure. Hereinafter, a message of a request for shifting the bottom in units of group in a stack, which is issued to the window system 12 using the client message, is called a message of a request for shifting the bottom in units of group in a stack. The message of a request for shifting the bottom in units of group in a stack contains a group value of a group which is desired to be shifted (target group).

In a case where the application programs 101, 102, and 103 issue messages of requests for shifting the bottom in units of group in a stack (ClientMessage), the messages are transmitted to the window manager 105 through the window system 12.

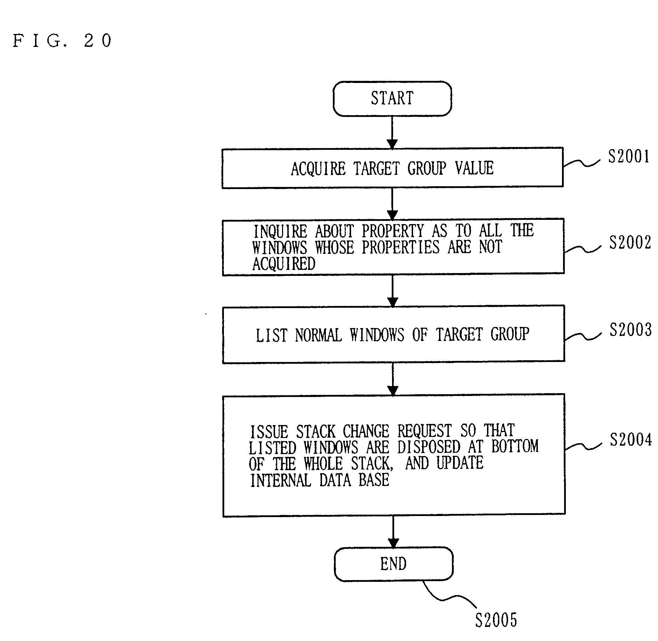

FIG. 20 shows a flow illustrating an example of an operation which is performed by the window manager 105 when receiving a message of a request for shifting the bottom in units of group in a stack.

As shown in FIG. 20, in step S2001, a target group value is acquired from a message of a request for shifting the bottom in units of group in a stack(ClientMessage) which is received at the time, and the procedure proceeds to step S2002.

In step S2002, the window types and the group values as to all the windows which are in the internal data base and whose property acquisition flags indicate "non-acquisition" are inquired of the window system 12, and for the windows whose window types and group values have been able to be acquired, the window types and the group values, and the fact that the property have been acquired are stored in the internal data base, and the procedure proceeds to step S2003.

In step S2003, the internal data base is searched for the normal windows having a target group value for listing, and the procedure proceeds to step S2004.

In step S2004, a stack change request is issued to the window system 12 so that the listed windows are disposed, with their stacking order remaining unchanged among them, at the bottom of the whole stack. Next, when a window whose stack location determination flag indicates "temporary" is present in the listed windows, the stack location of the window is updated so as to be "determined". Moreover, the stack location information is updated throughout the whole internal data base, and then the procedure proceeds to step S2005.

FIG. 21 shows a schematic diagram specifically exemplifying how the stack is changed according to the stack change request in step S2004.

As shown in FIG. 21, it can be seen that the normal windows having a target group value are shifted to the bottom of the whole stack.

In step S2005 shown in FIG. 20, the processing is completed.

### <Destruction request>

In FIG. 1, the application programs 101, 102, and 103 issue requests for destroying the created windows.

When the window system 12 receives a destruction request, it stops managing the corresponding window and delete the window. Then, a window destruction notification event (DestroyNotify) is issued to the window manager 105.

When the window manager 105 receives a window destruction notification event (DestroyNotify), it extracts a window identifier therefrom and searches the internal data base for the corresponding window information to delete the information, and thereafter updates the stack locations throughout the whole internal data base as necessary, and the processing is completed.

From the above, before the respective normal windows are displayed, the windows are collectively arranged as a group so as to determine a stacking order of the windows in the group, and therefore the respective windows of a group at the top are prevented from being stacked and displayed below windows of other groups. Further, the window management program is triggered by its reception of a stack change request to collectively arrange all the normal windows belonging to the target group of the stack change with maintaining their stacking order among them, and then executes the stack change, and therefore the application program can more easily grasp the stacking order of the windows of its own group. Moreover, the window management program is provided with functions of shifting the top of a group in a stack and shifting the bottom of a group in a stack, and thereby the stacking order of normal windows can be controlled in the group, and therefore the respective application programs can change the stack without concern for the normal windows displayed by the other application programs. Further, the window management program is provided with functions of shifting the top in units of group and shifting the bottom in units of grouping a stack. Thereby, for example, in a case where a group is assigned to each application program, even when a member of the windows belonging to the application program is not known, all the normal windows belonging to the application program can be shifted to the forefront (top) of the stack. Further, by setting a priority window, a service for enabling a specific window to be displayed with the highest priority regardless of the stacking order in units of group, can be provided.

Then, although in this embodiment the timing of the window manager acquiring a window type and a group value is when a mapping request event (MapRequest) is received and when a stack change request is received, the timing is not restricted thereto. The window type and the group value may be acquired with the timing of the application program setting the window type and group and be stored in the internal data base, which is even more efficient in processing. Further, with this timing, windows may be collectively arranged as a group so as to determine a stacking order in the group. Moreover, the change in window type and group value may be allowed or may not be allowed. In the case of allowing the change, when the window type is changed from a priority window to a normal window with the timing of setting a window type and group, the stack location determination flag is changed so as to indicate "temporary". Conversely, in a case where the window type is changed from a normal window to a priority window, the stack is changed so that the window is positioned at the top of the stack at the time. Further, in a case where a group value is changed without a change in window type, the stack location determination flag is changed so as to indicate "temporary". Then, the internal data base should be updated. On the other hand, in a case where the change is not allowed, the property acquisition flag is checked with the timing of setting a window type and group, and when the acquisition has been performed, the setting may be neglected.

Further, although an example for controlling two types of windows, a priority window and a normal window, is described, it is needless to say that the present invention can be easily achieved even when only one type, a normal window, is used.

Moreover, although a case where the window manager controls a stacking order of top level windows which are child windows of a root window is taken as an example, it is needless to say that the present invention can be executed with respect to descendant windows of the top level windows.

In addition, although the window management program includes an X window system and a window manager, and a window creation request and a mapping request are used as an interface with an application program, the present invention is not restricted thereto. Any interface may be used as long as the interface corresponds to a display request. In this case, when receiving the window display request, the window management program may perform together the processing to be performed when receiving the window creation request and the processing to be performed when receiving the mapping request, which processings are described in this embodiment.

When the windows are collectively arranged as a group so as to determine a stacking order in the group, the stacking order of the windows are merely changed. For example, however, it is also easy that the window management program create a representative window for each group and handles, when collectively arranging windows so as to determine a stacking order in the group, the windows as child windows of the representative window, thereby to perform controlling. Thereby, since a stack shift in units of group and switching between display and non-display of a window in units of group can be executed by controlling the representative window, the more windows the group has, the more loads in processing can be reduced. FIG. 22 shows a schematic diagram exemplifying a state of the stack in using the representative window.

Further, although the window management program does not perform such a control as windows positioned lower in stack than the group at the top are not displayed, a control can be also easily realized so as not to display the same. In this case, a map flag indicating display /non-display is added to the window information, and a state of a display request of the application program is stored in the map flag. When the group which the window belongs to comes to the top among normal windows in the stack, the map flag is checked, and when the map flag indicates "display", the mapping is performed, and when the map flag indicates "non-display", the window remains un-mapped. Conversely, when the group which the windows belongs to is no longer at the top among the normal windows in the stack, in the case of the map flag indicating "display", un-mapping processing is performed, and in the case of the map flag indicating "non-display", nothing is performed. Thereby, even if windows and the like of a group positioned lower in stack than a group at the top among normal windows are attempted to be displayed, the windows and the like are not displayed on the display unit. Therefore, there is no concern for halfway displaying windows of groups positioned lower in stack, on a portion which is not overlaid with windows of a group at the top.

Moreover, although in this embodiment, a specific window which is created and mapped by the window management program is not part icularly disposed immediately below a window whose stacking order is the bottom among all the windows belonging to a group at the top among normal windows, such disposition can be easily realized. Thereby, for example, when the specific window is displayed to fill the screen in the display unit, even if a window and the like of a group lower in stack than the specific window is attempted to be displayed, the window and the like are not displayed on the display unit. Therefore, there is no concern for halfway displaying windows of groups positioned lower in stack on a portion which is not overlaid with the windows of the group at the top. FIG. 23 shows a schematic diagram illustrating an example of a state of a stack in the case of using the specific window, and further FIG. 24 shows a schematic diagram illustrating an example of the display on a screen.

Although a case where three application programs are used is taken as an example, the present invention is not restricted thereto, and one or more programs may be used.

Moreover, although a case where one group is assigned to each application program is taken as an example, the present invention is not restricted thereto, and a plurality of groups may be assigned to one application, or one group may be assigned to a plurality of applications.

In addition, although described is an example where the window management program includes an X window system and a window manager, and events and various kinds of requests are transmitted and received therebetween, the present invention is not restricted thereto. The window system need not necessarily be an X window system and further the window management program need not necessarily be constructed such that it is divided into two so as to transmit and receive events and various kinds of requests therebetween. In a case where the window management program is integrally constructed and executed, an interface of an event or a message is changed so as to be function-based, thereby enabling this embodiment to be easily made applicable.

Further, although a specific window created by the window management program is not particularly disposed immediately above a window whose stacking order is the top among all the windows belonging to a group at the top among normal windows, such disposition can be easily realized. Thereby, when the group at the top is replaced with another group, in the case of an X window system, an XRestackWindows () function is used, and the specific window can be used to indicate destinations of stacks of window groups to shift. In a case where no window is positioned higher in stack than windows of the group at the top, the order of aligning all the windows present is determined and the order should be assigned to an argument of the XRestackWindows(). When the specific window is present, it is only required that the specific window and the window sets are assigned to the argument. Hereinafter, the reason will be briefly described. There are two methods for changing the stacking order using the XRestackWindows() function. The first method is a whole assignment method in which all the existing windows are collectively arrange in a stacking order and assigned to the argument. The second method is a partial assignment method in which a window having the stacking order unchanged, and windows positioned lower than the window and whose stacking orders are to be changed, are assigned to the argument. For example, in a case where when five windows of A, B, C, D, and E are present in the order staring from the higher position of the stack, the stacking order is changed to the order of A, C, B, D, E, (A, C, B, D, E) may be assigned to the argument as the whole assignment, and (A, C, B) may be assigned to the argument as the partial assignment. As described above, the partial assignment has an advantage of requiring the reduced number of windows to be assigned to the argument as compared to the whole assignment. As described above, a specific window created by the window management program is disposed immediately above the window whose stacking order is the top among all the windows belonging to the group at the top among the normal windows, and thereby the specific window can be utilized as "a window having the stacking order unchanged" for the argument in the partial assignment. Therefore, the stacking order can be changed using the partial assignment also when the group at the top is replaced with another group. Then, as another advantage of the partial assignment, the execution of the XRestackWindows () function more easily succeeds. This is because the window system operates asynchronously to the window manager, and the window creation and destruction based on the request from the application program is, unlike the mapping (window display), arbitrarily executed between the application program and the window system. Therefore, the information regarding whether a window is present or not, which is managed by the window manager, is sometimes different from the updated information. In this case, the whole assignment requires that the stacking order of all the windows is assigned, thereby failing in the change of stacking order.

In addition, in a case where an X window system is used, the window manager uses an XRestackWindows () function to control a stack. A window group and a window indicating a destination of the window group to shift are assigned to the argument of the XRestackWindows() function. However, in a case where any of the windows is destroyed, the stack control is not executed as intended in some cases. As a countermeasure against this, for example, when the window manager receives a window destruction notification event (DestroyNotify), the window manager searches the internal data base for the corresponding window information and deletes the same, and updates the stack locations throughout the whole internal data base as necessary, and then inquires about the stack tree in the window system at the time to acquire the stack tree, and eliminates a new window which is not recognized by the window manager from targets, and checks the stack tree for the conformity with the stack tree in the window manager, and in a case where the stack tree is different fromone recognized by the windowmanager, the window manager issues a stack change request for conforming to the stack tree in the window manager, and until the recognitions conform to each other, the window manager may repeat the inquiry about the stack tree in the window system at the time, checking for the conformity, and issuance of the stack change request. Thereby, even when the window system fails in stack change processing, the window manager can secure the conformity with the window system in recognizing the stack, thereby preventing a failure in processing.

In addition, the window manager may set a flag when executing the XRestackWindows(). Only in a case where the flag is set at the reception of a window destruction notification event (DestroyNotify), the window manager may put the flag down and perform processing for conformity of the stack tree. Thereby, the frequency for executing the processing for conformity of stack tree can be reduced.

Further, it is needless to say that any device which has mounted thereon a CPU for operating programs and a memory and attempts to display a plurality of windows on a display unit, such as a home computer, a cellular phone, a PDA (Personal Digital Assistance), a set top box, a digital still camera, and a camera integrated type VTR, may be used as a computer 7.

Further, although the display unit 11 is a part of the computer 7, it does not indicate that the display unit and the computer are physically integrated, and the display unit may be connected to the computer 7 in any manner regardless of whether the connection is wired or wireless.

Moreover, it is needless to say that the window management program for realizing the window stack control method according to this embodiment can be stored in a ROM, a disk or the like to be supplied to a computer as well as can also be supplied to the computer through a network.

### (Embodiment 2)

A window stack control method according to a second embodiment is a modification of the method according to the first embodiment, and the second embodiment is different from the first embodiment only in an operation performed by the window manager 105 when receiving a mapping request event (MapRequest) and in that the window manager 105 should not collectively arrange windows as a group so as to determine a stacking order in the group with the timing of the application program setting a window type and a group value in the second embodiment. Therefore, in this embodiment, only an operation performed by the window manager 105 when the window manager 105 receives a mapping request event (MapRequest) will be described.

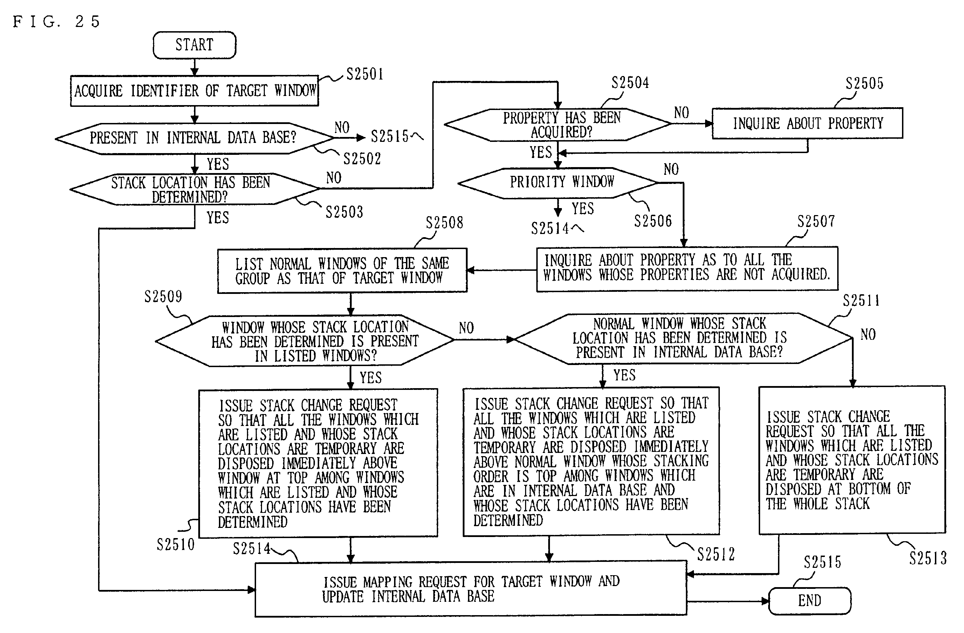

FIG. 25 shows a flow chart illustrating an example of an operation performed by the window manager 105 when receiving a mapping request event (MapRequest).

As shown in FIG. 25, in step S2501, an identifier of a target window to be mapped is acquired from a mapping request event (MapRequest) received at the time, and the procedure proceeds to step S2502.

In step S2502, the internal data base is searched for the identifier of the target window to be mapped. When the corresponding window information is present, the procedure proceeds to step S2503, and when it is not present, the procedure proceeds to step S2515.

In step S2503, it is checked in the internal data base whether or not the stack location determination flag of the target window indicates "determined", and when it indicates "determined", the procedure proceeds to step S2514, and when it indicates "temporary", the procedure proceeds to step S2504.

In step S2504, the property acquisition flag of the target window is checked, and when it indicates "acquired", the procedure proceeds to step S2506, and when it indicates "non-acquisition", the procedure proceeds to step S2505.

In step S2505, the window type and the group value of the target window are inquired of the window system to acquire the same, and the window type and the group value are stored in the internal data base, and the procedure proceeds to step S2506.

In step S2506, the window type of the target window is checked. When the window type is a priority window, the procedure proceeds to step S2514, and when the window type is a normal window, the procedure proceeds to step S2507.

In step S2507, as to all the windows which are in the internal data base and whose property acquisition flags indicate "non-acquisition", the window types and the group values are inquired of the window system 12, and as to the windows for which they have been acquired, the window types and the group values, and the fact that the properties have been acquired are stored in the internal data base, and the procedure proceeds to step S2508.

In step S2508, the internal data base is searched for the normal windows belonging to the same group as the target window for listing, and the procedure proceeds to step S2509.

In step S2509, when a window whose stack location determination flag indicates "determined" is present in the listed windows, the procedure proceeds to step S2510, and when it is not present, the procedure proceeds to step S2511.

In step S2510, a stack change request is issued to the window system 12 so that all the windows which are listed and whose stack location determination flags indicate "temporary" are disposed, with their stacking order remaining unchanged among them, immediately above the window at the top among the windows which are listed and whose stack location determination flags indicate "determined", and the procedure proceeds to step S2514.

FIG. 26 shows a schematic diagram specifically exemplifying how the stack is changed according to the stack change request in step S2510.

As shown in FIG. 26, it can be seen that the target window to be mapped and the normal windows which have the same group value as the target window to be mapped and whose stack location determination flags indicate "temporary" are shifted to immediately above the normal windows which have the same group value and whose stack location determination flags indicate "determined".

In FIG.25, in step S2511, when a normal window whose stack location determination flag indicates "determined" is present in the internal data base, the procedure proceeds to step S2512, and when it is not present, the procedure proceeds to step S2513.

In step S2512, a stack change request is issued to the window system 12 so that all the normal windows which are listed in step S2508 and whose stack location determination flags indicate "temporary" are disposed, with their stacking order remaining unchanged among them, immediately above the normal window whose stacking order is the top among the windows which are in the internal data base and whose stack location determination flags indicate "determined", and the procedure proceeds to step S2514.

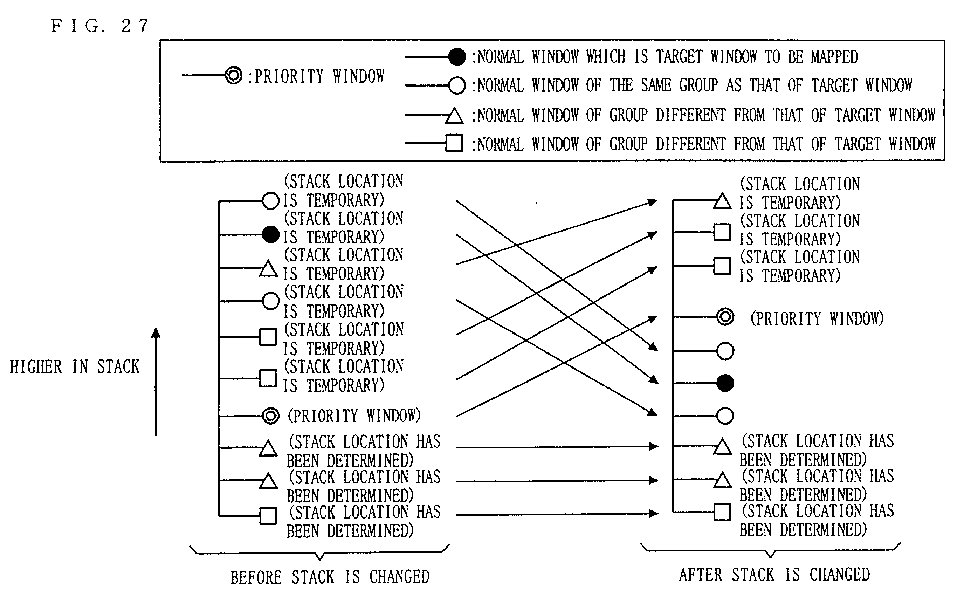

FIG. 27 shows a schematic diagram specifically exemplifying how the stack is changed according to the stack change request in step S2512.

As shown in FIG. 27, it can be seen that the target window to be mapped and the normal windows which have the same group value as the target window to be mapped and whose stack location determination flags indicate "temporary" are shifted to immediately above the window whose stacking order is the top among all the normal windows whose stack location determination flags indicate "determined".

In FIG. 25, in step S2513, a stack change request is issued to the window system 12 so that all the normal windows which are listed in step S2508 and whose stack location determination flags indicate "temporary" are disposed, with their stacking order remaining unchanged among them, at the bottom of the whole stack, and the procedure proceeds to step S2514.

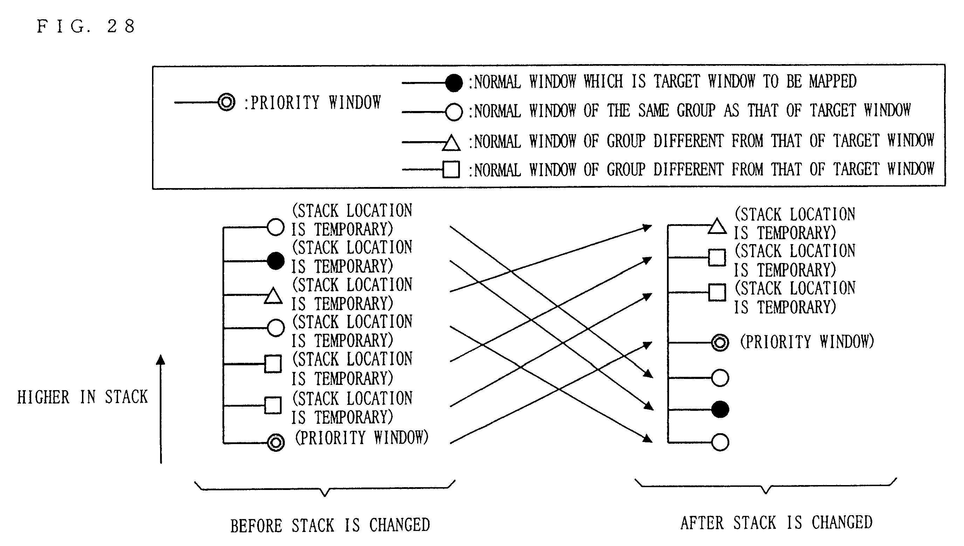

FIG. 28 shows a schematic diagram specifically exemplifying how the stack is changed according to the stack change request in step S2513.

As shown in FIG. 28, it can be seen that the target window to be mapped and the normal windows which have the same group value as the target window to be mapped and whose stack location determination flags indicate "temporary" are shifted to the bottom of the stack.

In FIG. 25, in step S2514, a mapping request for the target window to be mapped is issued to the window system 12, and in a case where the stack location determination flag of the window information of the target window in the internal data base indicates "not determined", the stack location is updated as "determined", and further, the stack locations are updated throughout the whole internal data base as necessary, and then the procedure proceeds to step S2515.

In step S2515, the processing is completed.

From the above, the window management program shifts the stack location of the group of the normal windows which have the same group value as the target window to be mapped and whose stack locations are temporary, with maintaining their up-and-down relationship in stack among the group of the normal windows, and collectively arrange the normal windows as a group, and therefore the stacking order in the same group is not changed due to the mapping and the load for managing the stacking order in the same group of the application are reduced. Further, as described in the first embodiment, also when the stack change request is received, the group of the normal windows which have the same group value as the target window and whose stack locations are temporary are collectively arrange as a group with their up-and-down relationship in stack being maintained among the group of the normal windows, and thereby the application program can manage the stacking order of the windows belonging to its own group based on the order of creating the windows. This matches a basis of an X window system, and the application program may manage a stack of normal windows of its own group based on the order of creation which is a typical stacking order determination rule.

Then, although in this embodiment the window manager acquires a group value of a window when receiving a mapping request event (MapRequest), the present invention is not restricted thereto. As in the case of the first embodiment, the group value may be acquired with the timing of the application program setting the window type and the group, and the window type and the group value, and the fact that the property has been acquired may be stored in the internal data base, which is even more efficient in processing. Unlike in the first embodiment, however, the windows should be collectively arranged as a group so as to determine a stacking order in the group with the above-described timing.

### INDUSTRIAL APPLICABILITY

The present invention is suitable for displaying a plurality of windows on a display unit, and particularly suitable for managing windows for a cellular phone, a PDA or the like in which a screen is small, thereby resulting in the windows being more likely to overlap each other.

## Claims

1. A window stack control method for managing a stack of a plurality of windows which are displayed on a display unit based on one or more application programs, comprising the steps of:
designating a group of a window from the application program;
receiving a request for displaying the window from the application program; and
collectively arranging the window as a group so as to determine a stacking order of the window in the group when displaying the window in response to the display request.

2. The window stack control method according to claim 1, wherein
in the collectively arranging step, when a request for displaying a first window which is not collectively arranged as a group is received from the application program, a first window group of windows which belong to a same group as the first window and which are not collectively arranged as a group and a second window group of windows which belong to a same group as the first window and which have been collectively arranged as a group, are collected with a stacking order in the first window group being maintained such that the stacking order of the first window group is consecutively followed by a stacking order of the second window group.

3. The window stack control method according to claim 1 or claim 2, further comprising
a step for creating a representative window for each group; wherein
the collectively arranging step includes handling, when collectively arranging a window as a group so as to determine a stacking order of the window in the group, the window as a child window of the representative window.

4. The window stack control method according to any of claims 1 to 3, further comprising the steps of:
receiving a request for shifting a top of a group in a window stack and a request for shifting a bottom of a group in a window stack, from the application program; and
changing the stack in the group in response to the request for shifting the top or the request for shifting the bottom.

5. The window stack control method according to claim 4, wherein
the stack changing step includes changing a stack so as to collect, when receiving, from the application program, the request for shifting the first window to a top of a group in a window stack and the request for shifting the first window to a bottom of a group in a window stack, a first window group of windows which belong to a same group as the first window and which are not collectively arranged as a group and a second window group of windows which belong to a same group as the first window and which have been collectively arranged as a group with a stacking order in the first window group being maintained such that the stacking order of the first window group is consecutively followed by a stacking order of the second window group.

6. The window stack control method according to any of claims 1 to 3, further comprising:
a step for receiving a request for shifting a top in units of group in a window stack and a request for shifting a bottom in units of group in a window stack, from the application program; and
a step for changing the stack in units of group in response to the request for shifting the top or the request for shifting the bottom.

7. The window stack control method according to claim 5, wherein
the stack changing step includes changing a stack so as to collect, when receiving, from the application program, the request for shifting a first group to a top in units of group in a window stack and the request for shifting a first group to a bottom in units of group in a window stack, a first window group of windows which belong to the first group and which are not collectively arranged as a group and a second window group of windows which belong to the first group and which have been collectively arranged as a group with a stacking order in the first window group being maintained such that the stacking order of the first window group is consecutively followed by a stacking order of the second window group.

8. The window stack control method according to claim 1, wherein
a window which is designated as a priority window by the application program is not caused to belong to any group and the priority window is caused to be always disposed higher in stack than all the windows which are displayed on a display unit and which belong to any of the groups.

9. The window stack control method according to claim 1, wherein
a window disposed lower in stack than a window belonging to a group at the top is always in a state of non-display.

10. The window stack control method according to claim 1, wherein
a specific window is disposed immediately below a window whose stacking order is the bottom among windows belonging to a group at the top.

11. The window stack control method according to claim 4 or claim 6, wherein
an X window system and a window manager manage a stack of a plurality of windows, and
a specific window is disposed immediately above a group at the top.

12. The window stack control method according to any of claims 1 to 3, wherein
an X window system and a window manager manage a stack of a plurality of windows, and
the window manager confirms whether or not its recognized stack conforms to a stack recognized by the window system when receiving a window destruction notification, and, in the case of non-conformity, performs processing for conforming a stack recognized by the window system to a stack recognized by the window manager.

13. The window stack control method according to any of claims 1 to 3, wherein
an X window system and a window manager manage a stack of a plurality of windows, and
the window manager sets a flag when requesting the window system to change a stack, and confirms whether or not its recognized stack conforms to a stack recognized by the window system only when the flag is set at the reception of a window destruction notification, and, in the case of non-conformity, performs processing for conforming a stack recognized by the window system to a stack recognized by the window manager, thereby to put the flag down.

14. The window stack control method according to claim 1, wherein
the collectively arranging step includes collecting, when a request for displaying a first window which is not collectively arranged as a group is received from the application program, the first window and a second window group of windows which belong to a same group as the first window and which have been collectively arranged as a group such that the stacking order of the first window is consecutively followed by a stacking order of the second window group.

15. A window management program for managing a stack of a plurality of windows which are displayed on a display unit based on one or more application programs, wherein a computer is operable to execute the steps of:
designating a group of a window from the application program;
receiving a request for displaying the window from the application program; and
collectively arranging the window as a group so as to determine a stacking order of the window in the group when receiving the display request.

16. A window management apparatus for managing, when displaying a plurality of windows on a display unit, a stack of the windows, comprising:
one or more application programs for displaying one or more windows on the display unit;
a window management program for managing a stack of the windows displayed by the one or more application programs; and
a processing unit for executing the application programs and the window management program, wherein
the application program designates a group of a window with respect to the window management program, and
the window management program performs control, when receiving a request for displaying a window from the application program and displaying the window, so as to collectively arrange the window as a group so as to determine a stacking order of the window in the group.

## Amended claims

### Amended claims under Art. 19.1 PCT

1. Amended) 1. A window stack control method for managing a stack of a plurality of windows which are displayed on a display unit based on one or more application programs, comprising the steps of:
receiving a request for newly creating a window from the application program;
designating a group of the window from the application program;
receiving a request for displaying the window from the application program; and
collectively arranging the window as a group so as to determine a stacking order of the window in the group when displaying the window in response to the display request, wherein
in the collectively arranging step,
a stacking order of the window is determined so as to be consecutively followed by a stacking order of a group to which the window belong, with maintaining stacking orders of respective window groups of windows which have been collectively arranged as groups.

2. Cancelled

3. The window stack control method according to claim 1 or claim 2, further comprising
a step for creating a representative window for each group; wherein
